# EUROPEAN PATENT SPECIFICATION

(11) **EP 4 292 356 B1**
(45) Date of publication and mention of the grant of the patent: **16.07.2025**
(21) Application number: 21711466.9
(22) Date of filing: 12.02.2021
(51) Int. Cl.: H04W 72/044, H04W 72/20

(54) **BEAM BASED MEASUREMENT AND RESOURCE MANAGEMENT TECHNIQUES FOR WIRELESS COMMUNICATIONS SYSTEMS**
STRAHLBASIERTE MESS- UND RESSOURCENVERWALTUNGSVERFAHREN FÜR DRAHTLOSE KOMMUNIKATIONSSYSTEME
TECHNIQUES DE MESURE ET DE GESTION DE RESSOURCES BASÉES SUR UN FAISCEAU POUR DES SYSTÈMES DE COMMUNICATION SANS FIL

(43) Date of publication of application: 20.12.2023
(73) Proprietor: QUALCOMM INCORPORATED, San Diego, California 92121-1714 (US)
(72) Inventor: BALASUBRAMANIAN, Anantharaman, San Diego, California 92121-1714 (US); WU, Shuanshuan, San Diego, California 92121-1714 (US); GULATI, Kapil, San Diego, California 92121-1714 (US); ABEDINI, Navid, San Diego, California 92121-1714 (US); LI, Junyi, San Diego, California 92121-1714 (US); DUTTA, Sourjya, San Diego, California 92121-1714 (US); GUO, Hui, San Diego, California 92121-1714 (US)
(74) Representative: Bardehle Pagenberg Partnerschaft mbB Patentanwälte Rechtsanwälte
(86) International application number: PCT/CN2021/076630
(87) International publication number: WO 2022/170622

(56) References cited:
- EP-A1- 3 700 101
- EP-A1- 3 726 740
- US-A1- 2019 140 811
- US-A1- 2020 336 253

## Description

### INTRODUCTION

The following relates to wireless communications, and more specifically to beam and resource management techniques.

Wireless communications systems are widely deployed to provide various types of communication content such as voice, video, packet data, messaging, broadcast, and so on. These systems may have the capability of supporting communication with multiple users by sharing the available system resources (e.g., time, frequency, and power). Examples of such multiple-access systems include fourth generation (4G) systems such as Long Term Evolution (LTE) systems, LTE-Advanced (LTE-A) systems, or LTE-A Pro systems, and fifth generation (5G) systems which may be referred to as New Radio (NR) systems. These systems may employ technologies such as code division multiple access (CDMA), time division multiple access (TDMA), frequency division multiple access (FDMA), orthogonal frequency division multiple access (OFDMA), or discrete Fourier transform spread orthogonal frequency division multiplexing (DFT-S-OFDM). A wireless multiple-access communications system may include one or more base stations or one or more network access nodes, each simultaneously supporting communication for multiple communication devices, which may be otherwise known as user equipment (UE).

US 2020/336253 A1 discloses a method for a user equipment (UE) to provide hybrid automatic repeat request acknowledgement (HARQ-ACK) information includes transmitting physical sidelink shared channels (PSSCHs), where each of the PSSCH transmissions provides a transport block (TB); receiving physical sidelink feedback channels (PSFCHs); and generating values for HARQ-ACK information bits from the PSFCH receptions. The PSFCH receptions correspond to the PSSCH transmissions and the values of the HARQ-ACK information bits correspond to the TBs in the PSSCH transmissions. The method further includes generating a HARQ-ACK codeword that includes the values of the HARQ-ACK information bits arranged in a predetermined order and transmitting the HARQ-ACK codeword in a physical uplink control channel (PUCCH).

US 2019/140811 A1 describes methods, systems, and devices for wireless communications. A wireless device may utilize different beam configurations for different signal types, traffic demand, path loss, capabilities of the wireless device or other wireless devices in the system, and the like. The wireless device also may be capable of determining different duplexing modes, which may be utilized in addition to the different beam configurations. The duplexing mode may be based on received measurement reports (e.g., from one or more reference signals) or in some instances, the duplexing mode may be determined by another node (e.g., a core network node, a base station) and transmitted to the wireless device.

EP 3700101 A1 provides a method and a device for a sidelink in a wireless communication system. A transmission terminal supporting a sidelink performs transmission/reception beam pairing by using control information for a sidelink. The transmission terminal and a reception terminal can find an optimum transmission/reception beam pair on the basis of a method of repeatedly transmitting/receiving control information by the sidelink. Therefore, an appropriate transmission/reception beam pair can be found without repeatedly transmitting a synchronization signal. The reception terminal can provide feedback information on the received control information to the transmission terminal. The transmission terminal can determine an optimum transmission/reception beam pair on the basis of the feedback information.

### SUMMARY

The scope of protection is defined by the independent claims.

Optional variants are defined in the dependent claims.

A method for wireless communications at a first user equipment (UE) is described, as defined in claim 1.

An apparatus for wireless communications at a first UE is described, as defined in claim 14, as far as referring back to claim 1.

A computer program for wireless communications at a first UE is described, as defined in claim 15, as far as referring back to claim 1. The following explanations regarding a non-transitory computer-readable medium likewise apply to the computer program.

Some examples of the method, apparatuses, and non-transitory computer-readable medium described herein may further include operations, features, means, or instructions for receiving the sidelink control information via a first transmit beam direction associated with the second UE and determining the one or more transmit beam directions associated with the resources reserved by the second UE based on receiving the sidelink control information via the first transmit beam direction associated with the second UE.

In some examples of the method, apparatuses, and non-transitory computer-readable medium described herein, the one or more transmit beam directions include the first transmit beam direction.

In some examples of the method, apparatuses, and non-transitory computer-readable medium described herein, the one or more transmit beam directions include a second transmit beam direction, the indication of the one or more transmit beam directions indicating the second transmit beam direction relative to the first transmit beam direction.

Some examples of the method, apparatuses, and non-transitory computer-readable medium described herein may further include operations, features, means, or instructions for determining a set of directions for transmitting the second message based on the indication of the one or more transmit beam directions associated with the resources reserved by the second UE, each direction of the set of directions being different from the direction of the first receive beam or directions adjacent to the direction of the first receive beam.

Some examples of the method, apparatuses, and non-transitory computer-readable medium described herein may further include operations, features, means, or instructions for determining a set of resources for transmitting a third message concurrent with receiving the first message using the first receive beam, the set of resources including resources different from the resources reserved by the second UE, resources different from a second set of resources adjacent to the resources reserved by the second UE, or a combination thereof and transmitting, via resources of the set of resources, the third message using a second transmit beam of the first UE, the direction of the second transmit beam being the direction of the first receive beam, a direction adjacent to the direction of the first receive beam, or a combination thereof.

Some examples of the method, apparatuses, and non-transitory computer-readable medium described herein may further include operations, features, means, or instructions for receiving, from a third UE, second sidelink control information for performing full-duplex communications with the third UE, the second sidelink control information including an indication of second resources reserved by the third UE and an indication of one or more transmit beam directions associated with the resources reserved by the third UE and selecting, based on receiving the second sidelink control information and the sidelink control information, the direction of the first transmit beam from a set of directions, each direction of the set of directions being different from the direction of the first receive beam, a second receive beam associated with receiving a third message from the third UE, or a combination thereof.

Some examples of the method, apparatuses, and non-transitory computer-readable medium described herein may further include operations, features, means, or instructions for selecting, based on receiving the second sidelink control information and the sidelink control information, resources for transmitting the second message from a set of resources different from the resources reserved by the second UE, the second resources reserved by the third UE, or a combination thereof.

Some examples of the method, apparatuses, and non-transitory computer-readable medium described herein may further include operations, features, means, or instructions for obtaining a set of interference measurements for a set of beam pairs, each interference measurement corresponding to a respective transmit beam and the first receive beam, identifying a first interference measurement of the set of interference measurements associated with a value lower than other interference measurements of the set of interference measurements, and selecting the first transmit beam from a set of multiple transmit beams based on identifying the first interference measurement, the first interference measurement corresponding to a beam pair including the first transmit beam and the first receive beam.

Some examples of the method, apparatuses, and non-transitory computer-readable medium described herein may further include operations, features, means, or instructions for transmitting sidelink control information including an indication of second resources reserved by the first UE and an indication of one or more transmit beam directions associated with the resources reserved by the first UE.

A method for wireless communications at a first UE is described, as defined in claim 10.

An corresponding apparatus for wireless communications at a first UE is described, as defined in claim 14, as far as referring back to claim 10.

A computer program for wireless communications at a first UE is described, as defined in claim 15, as far as referring back to claim 10. The following explanations regarding a non-transitory computer-readable medium likewise apply to the computer program.

Some examples of the method, apparatuses, and non-transitory computer-readable medium described herein may further include operations, features, means, or instructions for receiving second sidelink control information using a first receive beam, the second sidelink control information including an indication of resources reserved by a third UE, an indication of a second transmit beam direction associated with the third UE, or a combination thereof and determining the one or more transmit beam directions associated with the resources reserved by the first UE based on receiving the second sidelink control information via the first receive beam.

Some examples of the method, apparatuses, and non-transitory computer-readable medium described herein may further include operations, features, means, or instructions for selecting the one or more transmit beam directions from a set of transmit beam directions, each transmit beam direction of the set of transmit beam directions being different from a direction of the first receive beam or directions adjacent to the direction of the first receive beam.

Some examples of the method, apparatuses, and non-transitory computer-readable medium described herein may further include operations, features, means, or instructions for obtaining a set of interference measurements for a set of beam pairs, each interference measurement corresponding to a respective transmit beam and the first receive beam, identifying a first interference measurement of the set of interference measurements associated with a value lower than other interference measurements of the set of interference measurements, and selecting the first transmit beam from a set of multiple transmit beams based on identifying the first interference measurement, the first interference measurement corresponding to a beam pair including the first transmit beam and the first receive beam.

In some examples of the method, apparatuses, and non-transitory computer-readable medium described herein, the one or more transmit beam directions include the first transmit beam direction.

In some examples of the method, apparatuses, and non-transitory computer-readable medium described herein, the one or more transmit beam directions include a second transmit beam direction, the indication of the one or more transmit beam directions indicating the second transmit beam direction relative to the first transmit beam direction.

### BRIEF DESCRIPTION OF THE DRAWINGS

FIG. 1 illustrates an example of a wireless communications system that supports beam based measurement and resource management techniques for wireless communications systems in accordance with aspects of the present disclosure.
FIG. 2 illustrates an example of a wireless communications system that supports beam based measurement and resource management techniques for wireless communications systems in accordance with aspects of the present disclosure.
FIG. 3 illustrates an example of a resource pool that supports beam based measurement and resource management techniques for wireless communications systems in accordance with aspects of the present disclosure.
FIG. 4 illustrates an example of a process flow that supports beam based measurement and resource management techniques for wireless communications systems in accordance with aspects of the present disclosure.
FIGs. 5 and 6 show block diagrams of devices that support beam based measurement and resource management techniques for wireless communications systems in accordance with aspects of the present disclosure.
FIG. 7 shows a block diagram of a communications manager that supports beam based measurement and resource management techniques for wireless communications systems in accordance with aspects of the present disclosure.
FIG. 8 shows a diagram of a system including a device that supports beam based measurement and resource management techniques for wireless communications systems in accordance with aspects of the present disclosure.
FIGs. 9 through 12 show flowcharts illustrating methods that support beam based measurement and resource management techniques for wireless communications systems in accordance with aspects of the present disclosure.

### DETAILED DESCRIPTION

Some wireless communications systems, such as fifth generation (5G) systems which may be referred to as New Radio (NR) systems, may support sidelink communications. A sidelink may refer to a communication link between similar devices, such as user equipment (UE), relay, or end devices, among other examples of devices. For example, a sidelink may support communications between multiple UEs (e.g., in a vehicle-to-everything (V2X) system, a vehicle-to-vehicle (V2V) system, a device-to-device (D2D) system, among other examples), between multiple base stations (e.g., in an integrated access and backhaul (IAB) deployment), or between other types of wireless communications devices. It is noted that while various examples provided herein are discussed for UE sidelink devices, such sidelink techniques may be used for any type of wireless devices that use sidelink communications. For example, a sidelink may support one or more of D2D communications, V2X or V2V communications, message relaying, discovery signaling, beacon signaling, or other signals transmitted over-the-air from one wireless device to one or more other similar wireless devices.

In some cases, a first UE may receive a sidelink control information (SCI) message indicating a set of time frequency resources reserved for a second UE (e.g., the second UE may reserve the set of resources for subsequent communications using the SCI message). The first UE may refrain from using the set of resources reserved by the second UE for communications with other UEs based on receiving the SCI message from the second UE. In this manner, the second UE may experience less interference or a relatively reduce likelihood of signal collisions for the communications using the reserved set of resources. However, such techniques may fail to support full duplex (FD) communications. In a full duplex mode, a wireless device (e.g., a UE) may simultaneously transmit uplink communications and receive downlink communications, for example, during a same transmission time interval (TTI), which may result in relatively efficient communications (e.g., higher spectrum efficiency, reduced latency, improved resource utilization, etc.). In some cases, the first UE may be unable to communicate via the reserved resources (e.g., receiving a communication from the second UE and transmitting communications to other UEs using the same resources using full duplex communications), which may result in spectral inefficiency and poor resource utilization.

In accordance with the techniques described herein, a wireless communications system may be enabled to support FD operations for sidelink communications. For example, a first UE may receive a SCI message indicating resources reserved by a second UE for communications (e.g., the second UE may reserve resources for a subsequent transmission to one or more UEs using the reserved resources). Additionally or alternatively, the SCI message may indicate a first set of transmit beam directions associated with the second UE (e.g., an SCI message may indicate directions in which the second UE intends to transmit subsequent communications). The first UE may determine a first receive beam direction for a receive beam of the first UE based on the SCI message (e.g., the first UE may determine one or more receive beam directions that correspond to the indicated one or more transmit beam directions associated with the second UE). The first UE may receive communications from the second UE using the receive beam in the determined receive beam direction.

The first UE may transmit communications to other UEs concurrent with receiving the communications from the second UE (e.g., the first UE may transmit communications to other UEs at a same or overlapping time duration as receiving the communications from the second UE). For example, the first UE may select a first transmit beam direction from a set of available directions for transmitting the communications. In some examples, the set of available directions for transmission at the first UE may be different from (e.g., exclude) one or more receive beam directions associated with the first set of transmit beam directions of the second UE. Additionally or alternatively, the set of available directions may be different from one or more directions adjacent to the one or more receive beam directions of the first UE. Such techniques may enable the first UE to perform full duplex operations using the reserved set of resources while maintaining a relatively low likelihood of interference with the communications of the second UE (e.g., self-interference between receiving a signal from the second UE and transmitting another signal on the same resources may satisfy a threshold). For example, the first UE may use the first reserved set of resources to concurrently receive a first message from the second UE in the first receive beam direction and transmit a second message in a selected transmit beam direction with relatively low interference between the first message and the second message. Such techniques may result in relatively efficient communications (e.g., higher spectrum efficiency, reduced latency, improved resource utilization, etc.).

In some examples, the indication of the set of transmit beam directions may be indicated relative to a current direction. For example, the second UE may transmit an indication of a direction relative to the direction of a beam used for transmitting the SCI message. Additionally or alternatively, the first UE may be configured to determine that the transmit beam direction of the SCI message is the transmit beam direction associated with the reserved resources indicated by the SCI message. In some examples, the first UE may transmit communications in a transmit beam direction that is the same or adjacent to the receive beam direction for a set of resources. For example, the first UE may receive communications on a first set of resources in a first direction and the first UE may transmit communications on a second set of resources in the first direction (e.g., the second set of resources may be different from the first set of resources or adjacent resources to the first set of resources).

In some examples, the first UE may perform an interference measurement procedure (e.g., the first UE may determine an interference metric between a receive beam direction and a set of potential transmit beam directions). For example, the first UE may determine a transmit beam direction for FD communications based on a result of the interference measurement procedure indicating the transmit beam direction satisfies a threshold (e.g., the transmit beam direction is associated with a lowest interference measurement or satisfies an interference threshold). In some examples, the first UE may implement one or more techniques as described herein for multiple UEs. For example, the first UE may receive multiple SCI messages indicating multiple sets of transmit directions and/or multiple sets of reserved resources. The first UE may select transmit beam directions, resources, or any combination thereof based on the received SCI messages.

Aspects of the disclosure are initially described in the context of wireless communications systems. Aspects of the disclosure are then described in the context of resource pools and process flows. Aspects of the disclosure are further illustrated by and described with reference to apparatus diagrams, system diagrams, and flowcharts that relate to beam based measurement and resource management techniques for wireless communications systems.

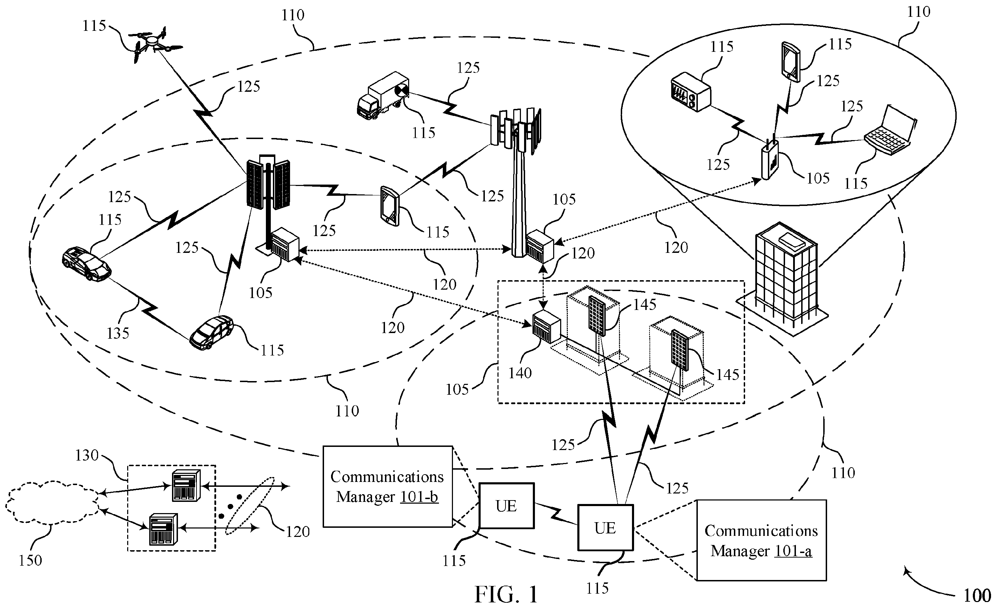

**FIG.** 1 illustrates an example of a wireless communications system 100 that supports beam based measurement and resource management techniques for wireless communications systems in accordance with aspects of the present disclosure. The wireless communications system 100 may include one or more base stations 105, one or more UEs 115, and a core network 130. In some examples, the wireless communications system 100 may be a Long Term Evolution (LTE) network, an LTE-Advanced (LTE-A) network, an LTE-A Pro network, or a New Radio (NR) network. In some examples, the wireless communications system 100 may support enhanced broadband communications, ultra-reliable (e.g., mission critical) communications, low latency communications, communications with low-cost and low-complexity devices, or any combination thereof.

The base stations 105 may be dispersed throughout a geographic area to form the wireless communications system 100 and may be devices in different forms or having different capabilities. The base stations 105 and the UEs 115 may wirelessly communicate via one or more communication links 125. Each base station 105 may provide a coverage area 110 over which the UEs 115 and the base station 105 may establish one or more communication links 125. The coverage area 110 may be an example of a geographic area over which a base station 105 and a UE 115 may support the communication of signals according to one or more radio access technologies.

The UEs 115 may be dispersed throughout a coverage area 110 of the wireless communications system 100, and each UE 115 may be stationary, or mobile, or both at different times. The UEs 115 may be devices in different forms or having different capabilities. Some example UEs 115 are illustrated in FIG. 1. The UEs 115 described herein may be able to communicate with various types of devices, such as other UEs 115, the base stations 105, or network equipment (e.g., core network nodes, relay devices, integrated access and backhaul (IAB) nodes, or other network equipment), as shown in FIG. 1.

The base stations 105 may communicate with the core network 130, or with one another, or both. For example, the base stations 105 may interface with the core network 130 through one or more backhaul links 120 (e.g., via an S1, N2, N3, or other interface). The base stations 105 may communicate with one another over the backhaul links 120 (e.g., via an X2, Xn, or other interface) either directly (e.g., directly between base stations 105), or indirectly (e.g., via core network 130), or both. In some examples, the backhaul links 120 may be or include one or more wireless links.

One or more of the base stations 105 described herein may include or may be referred to by a person having ordinary skill in the art as a base transceiver station, a radio base station, an access point, a radio transceiver, a NodeB, an eNodeB (eNB), a next-generation NodeB or a giga-NodeB (either of which may be referred to as a gNB), a Home NodeB, a Home eNodeB, or other suitable terminology.

A UE 115 may include or may be referred to as a mobile device, a wireless device, a remote device, a handheld device, or a subscriber device, or some other suitable terminology, where the "device" may also be referred to as a unit, a station, a terminal, or a client, among other examples. A UE 115 may also include or may be referred to as a personal electronic device such as a cellular phone, a personal digital assistant (PDA), a tablet computer, a laptop computer, or a personal computer. In some examples, a UE 115 may include or be referred to as a wireless local loop (WLL) station, an Internet of Things (IoT) device, an Internet of Everything (IoE) device, or a machine type communications (MTC) device, among other examples, which may be implemented in various objects such as appliances, or vehicles, meters, among other examples.

The UEs 115 described herein may be able to communicate with various types of devices, such as other UEs 115 that may sometimes act as relays as well as the base stations 105 and the network equipment including macro eNBs or gNBs, small cell eNBs or gNBs, or relay base stations, among other examples, as shown in FIG. 1.

The UEs 115 and the base stations 105 may wirelessly communicate with one another via one or more communication links 125 over one or more carriers. The term "carrier" may refer to a set of radio frequency spectrum resources having a defined physical layer structure for supporting the communication links 125. For example, a carrier used for a communication link 125 may include a portion of a radio frequency spectrum band (e.g., a bandwidth part (BWP)) that is operated according to one or more physical layer channels for a given radio access technology (e.g., LTE, LTE-A, LTE-A Pro, NR). Each physical layer channel may carry acquisition signaling (e.g., synchronization signals, system information), control signaling that coordinates operation for the carrier, user data, or other signaling. The wireless communications system 100 may support communication with a UE 115 using carrier aggregation or multi-carrier operation. A UE 115 may be configured with multiple downlink component carriers and one or more uplink component carriers according to a carrier aggregation configuration. Carrier aggregation may be used with both frequency division duplexing (FDD) and time division duplexing (TDD) component carriers.

Signal waveforms transmitted over a carrier may be made up of multiple subcarriers (e.g., using multi-carrier modulation (MCM) techniques such as orthogonal frequency division multiplexing (OFDM) or discrete Fourier transform spread OFDM (DFT-S-OFDM)). In a system employing MCM techniques, a resource element may consist of one symbol period (e.g., a duration of one modulation symbol) and one subcarrier, where the symbol period and subcarrier spacing are inversely related. The number of bits carried by each resource element may depend on the modulation scheme (e.g., the order of the modulation scheme, the coding rate of the modulation scheme, or both). Thus, the more resource elements that a UE 115 receives and the higher the order of the modulation scheme, the higher the data rate may be for the UE 115. A wireless communications resource may refer to a combination of a radio frequency spectrum resource, a time resource, and a spatial resource (e.g., spatial layers or beams), and the use of multiple spatial layers may further increase the data rate or data integrity for communications with a UE 115.

The time intervals for the base stations 105 or the UEs 115 may be expressed in multiples of a basic time unit which may, for example, refer to a sampling period of *Tₛ =* 1/(Δ*fₘₐₓ* · *N_{f}*) seconds, where Δ*fₘₐₓ* may represent the maximum supported subcarrier spacing, and *N_{f}* may represent the maximum supported discrete Fourier transform (DFT) size. Time intervals of a communications resource may be organized according to radio frames each having a specified duration (e.g., 10 milliseconds (ms)). Each radio frame may be identified by a system frame number (SFN) (e.g., ranging from 0 to 1023).

Each frame may include multiple consecutively numbered subframes or slots, and each subframe or slot may have the same duration. In some examples, a frame may be divided (e.g., in the time domain) into subframes, and each subframe may be further divided into a number of slots. Alternatively, each frame may include a variable number of slots, and the number of slots may depend on subcarrier spacing. Each slot may include a number of symbol periods (e.g., depending on the length of the cyclic prefix prepended to each symbol period). In some wireless communications systems 100, a slot may further be divided into multiple mini-slots containing one or more symbols. Excluding the cyclic prefix, each symbol period may contain one or more (e.g., *N_{f}*) sampling periods. The duration of a symbol period may depend on the subcarrier spacing or frequency band of operation.

A subframe, a slot, a mini-slot, or a symbol may be the smallest scheduling unit (e.g., in the time domain) of the wireless communications system 100 and may be referred to as a transmission time interval (TTI). In some examples, the TTI duration (e.g., the number of symbol periods in a TTI) may be variable. Additionally or alternatively, the smallest scheduling unit of the wireless communications system 100 may be dynamically selected (e.g., in bursts of shortened TTIs (sTTIs)).

Physical channels may be multiplexed on a carrier according to various techniques. A physical control channel and a physical data channel may be multiplexed on a downlink carrier, for example, using one or more of time division multiplexing (TDM) techniques, frequency division multiplexing (FDM) techniques, or hybrid TDM-FDM techniques. A control region (e.g., a control resource set (CORESET)) for a physical control channel may be defined by a number of symbol periods and may extend across the system bandwidth or a subset of the system bandwidth of the carrier. One or more control regions (e.g., CORESETs) may be configured for a set of the UEs 115. For example, one or more of the UEs 115 may monitor or search control regions for control information according to one or more search space sets, and each search space set may include one or multiple control channel candidates in one or more aggregation levels arranged in a cascaded manner. An aggregation level for a control channel candidate may refer to a number of control channel resources (e.g., control channel elements (CCEs)) associated with encoded information for a control information format having a given payload size. Search space sets may include common search space sets configured for sending control information to multiple UEs 115 and UE-specific search space sets for sending control information to a specific UE 115.

The electromagnetic spectrum is often subdivided, based on frequency/wavelength, into various classes, bands, channels, etc. In 5G NR two initial operating bands have been identified as frequency range designations FR1 (410 MHz - 7.125 GHz) and FR2 (24.25 GHz - 52.6 GHz). It should be understood that although a portion of FR1 is greater than 6 GHz, FR1 is often referred to (interchangeably) as a "Sub-6 GHz" band in various documents and articles. A similar nomenclature issue sometimes occurs with regard to FR2, which is often referred to (interchangeably) as a "millimeter wave" band in documents and articles, despite being different from the extremely high frequency (EHF) band (30 GHz - 300 GHz) which is identified by the International Telecommunications Union (ITU) as a "millimeter wave" band.

The frequencies between FR1 and FR2 are often referred to as mid-band frequencies. Recent 5G NR studies have identified an operating band for these mid-band frequencies as frequency range designation FR3 (7.125 GHz - 24.25 GHz). Frequency bands falling within FR3 may inherit FR1 characteristics and/or FR2 characteristics, and thus may effectively extend features of FR1 and/or FR2 into mid-band frequencies. In addition, higher frequency bands are currently being explored to extend 5G NR operation beyond 52.6 GHz. For example, three higher operating bands have been identified as frequency range designations FR4a or FR4-1 (52.6 GHz - 71 GHz), FR4 (52.6 GHz - 114.25 GHz), and FR5 (114.25 GHz - 300 GHz). Each of these higher frequency bands falls within the EHF band.

With the above aspects in mind, unless specifically stated otherwise, it should be understood that the term "sub-6 GHz" or the like if used herein may broadly represent frequencies that may be less than 6 GHz, may be within FR1, or may include mid-band frequencies. Further, unless specifically stated otherwise, it should be understood that the term "millimeter wave" or the like if used herein may broadly represent frequencies that may include mid-band frequencies, may be within FR2, FR4, FR4-a or FR4-1, and/or FR5, or may be within the EHF band.

In some examples, a base station 105 may be movable and therefore provide communication coverage for a moving geographic coverage area 110. In some examples, different geographic coverage areas 110 associated with different technologies may overlap, but the different geographic coverage areas 110 may be supported by the same base station 105. In other examples, the overlapping geographic coverage areas 110 associated with different technologies may be supported by different base stations 105. The wireless communications system 100 may include, for example, a heterogeneous network in which different types of the base stations 105 provide coverage for various geographic coverage areas 110 using the same or different radio access technologies.

Some UEs 115, such as MTC or IoT devices, may be low cost or low complexity devices and may provide for automated communication between machines (e.g., via Machine-to-Machine (M2M) communication). M2M communication or MTC may refer to data communication technologies that allow devices to communicate with one another or a base station 105 without human intervention. In some examples, M2M communication or MTC may include communications from devices that integrate sensors or meters to measure or capture information and relay such information to a central server or application program that makes use of the information or presents the information to humans interacting with the application program. Some UEs 115 may be designed to collect information or enable automated behavior of machines or other devices. Examples of applications for MTC devices include smart metering, inventory monitoring, water level monitoring, equipment monitoring, healthcare monitoring, wildlife monitoring, weather and geological event monitoring, fleet management and tracking, remote security sensing, physical access control, and transaction-based business charging.

The wireless communications system 100 may be configured to support ultra-reliable communications or low-latency communications, or various combinations thereof. For example, the wireless communications system 100 may be configured to support ultra-reliable low-latency communications (URLLC) or mission critical communications. The UEs 115 may be designed to support ultra-reliable, low-latency, or critical functions (e.g., mission critical functions). Ultra-reliable communications may include private communication or group communication and may be supported by one or more mission critical services such as mission critical push-to-talk (MCPTT), mission critical video (MCVideo), or mission critical data (MCData). Support for mission critical functions may include prioritization of services, and mission critical services may be used for public safety or general commercial applications. The terms ultra-reliable, low-latency, mission critical, and ultra-reliable low-latency may be used interchangeably herein.

In some examples, a UE 115 may also be able to communicate directly with other UEs 115 over a device-to-device (D2D) communication link 135 (e.g., using a peer-to-peer (P2P) or D2D protocol). One or more UEs 115 utilizing D2D communications may be within the geographic coverage area 110 of a base station 105. Other UEs 115 in such a group may be outside the geographic coverage area 110 of a base station 105 or be otherwise unable to receive transmissions from a base station 105. In some examples, groups of the UEs 115 communicating via D2D communications may utilize a one-to-many (1:M) system in which each UE 115 transmits to every other UE 115 in the group. In some examples, a base station 105 facilitates the scheduling of resources for D2D communications. In other cases, D2D communications are carried out between the UEs 115 without the involvement of a base station 105.

In some systems, the D2D communication link 135 may be an example of a communication channel, such as a sidelink communication channel, between vehicles (e.g., UEs 115). In some examples, vehicles may communicate using vehicle-to-everything (V2X) communications, vehicle-to-vehicle (V2V) communications, or some combination of these. A vehicle may signal information related to traffic conditions, signal scheduling, weather, safety, emergencies, or any other information relevant to a V2X system. In some examples, vehicles in a V2X system may communicate with roadside infrastructure, such as roadside units, or with the network via one or more network nodes (e.g., base stations 105) using vehicle-to-network (V2N) communications, or with both.

The core network 130 may provide user authentication, access authorization, tracking, Internet Protocol (IP) connectivity, and other access, routing, or mobility functions. The core network 130 may be an evolved packet core (EPC) or 5G core (5GC), which may include at least one control plane entity that manages access and mobility (e.g., a mobility management entity (MME), an access and mobility management function (AMF)) and at least one user plane entity that routes packets or interconnects to external networks (e.g., a serving gateway (S-GW), a Packet Data Network (PDN) gateway (P-GW), or a user plane function (UPF)). The control plane entity may manage non-access stratum (NAS) functions such as mobility, authentication, and bearer management for the UEs 115 served by the base stations 105 associated with the core network 130. User IP packets may be transferred through the user plane entity, which may provide IP address allocation as well as other functions. The user plane entity may be connected to IP services 150 for one or more network operators. The IP services 150 may include access to the Internet, Intranet(s), an IP Multimedia Subsystem (IMS), or a Packet-Switched Streaming Service.

Some of the network devices, such as a base station 105, may include subcomponents such as an access network entity 140, which may be an example of an access node controller (ANC). Each access network entity 140 may communicate with the UEs 115 through one or more other access network transmission entities 145, which may be referred to as radio heads, smart radio heads, or transmission/reception points (TRPs). Each access network transmission entity 145 may include one or more antenna panels. In some configurations, various functions of each access network entity 140 or base station 105 may be distributed across various network devices (e.g., radio heads and ANCs) or consolidated into a single network device (e.g., a base station 105).

The wireless communications system 100 may operate using one or more frequency bands, (e.g., in the range of 300 megahertz (MHz) to 300 gigahertz (GHz)). Generally, the region from 300 MHz to 3 GHz is known as the ultra-high frequency (UHF) region or decimeter band because the wavelengths range from approximately one decimeter to one meter in length. The UHF waves may be blocked or redirected by buildings and environmental features, but the waves may penetrate structures sufficiently for a macro cell to provide service to the UEs 115 located indoors. The transmission of UHF waves may be associated with smaller antennas and shorter ranges (e.g., less than 100 kilometers) compared to transmission using the smaller frequencies and longer waves of the high frequency (HF) or very high frequency (VHF) portion of the spectrum below 300 MHz.

The wireless communications system 100 may utilize both licensed and unlicensed radio frequency spectrum bands. For example, the wireless communications system 100 may employ License Assisted Access (LAA), LTE-Unlicensed (LTE-U) radio access technology, or NR technology in an unlicensed band such as the 5 GHz industrial, scientific, and medical (ISM) band. When operating in unlicensed radio frequency spectrum bands, devices such as the base stations 105 and the UEs 115 may employ carrier sensing for collision detection and avoidance. In some examples, operations in unlicensed bands may be based on a carrier aggregation configuration in conjunction with component carriers operating in a licensed band (e.g., LAA). Operations in unlicensed spectrum may include downlink transmissions, uplink transmissions, P2P transmissions, or D2D transmissions, among other examples.

A base station 105 or a UE 115 may be equipped with multiple antennas, which may be used to employ techniques such as transmit diversity, receive diversity, multiple-input multiple-output (MIMO) communications, or beamforming. The antennas of a base station 105 or a UE 115 may be located within one or more antenna arrays or antenna panels, which may support MIMO operations or transmit or receive beamforming. For example, one or more base station antennas or antenna arrays may be co-located at an antenna assembly, such as an antenna tower. In some examples, antennas or antenna arrays associated with a base station 105 may be located in diverse geographic locations. A base station 105 may have an antenna array with a number of rows and columns of antenna ports that the base station 105 may use to support beamforming of communications with a UE 115. Likewise, a UE 115 may have one or more antenna arrays that may support various MIMO or beamforming operations. Additionally or alternatively, an antenna panel may support radio frequency beamforming for a signal transmitted via an antenna port.

The base stations 105 or the UEs 115 may use MIMO communications to exploit multipath signal propagation and increase the spectral efficiency by transmitting or receiving multiple signals via different spatial layers. Such techniques may be referred to as spatial multiplexing. The multiple signals may, for example, be transmitted by the transmitting device via different antennas or different combinations of antennas. Likewise, the multiple signals may be received by the receiving device via different antennas or different combinations of antennas. Each of the multiple signals may be referred to as a separate spatial stream and may carry bits associated with the same data stream (e.g., the same codeword) or different data streams (e.g., different codewords). Different spatial layers may be associated with different antenna ports used for channel measurement and reporting. MIMO techniques include single-user MIMO (SU-MIMO), where multiple spatial layers are transmitted to the same receiving device, and multiple-user MIMO (MU-MIMO), where multiple spatial layers are transmitted to multiple devices.

Beamforming, which may also be referred to as spatial filtering, directional transmission, or directional reception, is a signal processing technique that may be used at a transmitting device or a receiving device (e.g., a base station 105, a UE 115) to shape or steer an antenna beam (e.g., a transmit beam, a receive beam) along a spatial path between the transmitting device and the receiving device. Beamforming may be achieved by combining the signals communicated via antenna elements of an antenna array such that some signals propagating at particular orientations with respect to an antenna array experience constructive interference while others experience destructive interference. The adjustment of signals communicated via the antenna elements may include a transmitting device or a receiving device applying amplitude offsets, phase offsets, or both to signals carried via the antenna elements associated with the device. The adjustments associated with each of the antenna elements may be defined by a beamforming weight set associated with a particular orientation (e.g., with respect to the antenna array of the transmitting device or receiving device, or with respect to some other orientation).

A base station 105 or a UE 115 may use beam sweeping techniques as part of beam forming operations. For example, a base station 105 may use multiple antennas or antenna arrays (e.g., antenna panels) to conduct beamforming operations for directional communications with a UE 115. Some signals (e.g., synchronization signals, reference signals, beam selection signals, or other control signals) may be transmitted by a base station 105 multiple times in different directions. For example, the base station 105 may transmit a signal according to different beamforming weight sets associated with different directions of transmission. Transmissions in different beam directions may be used to identify (e.g., by a transmitting device, such as a base station 105, or by a receiving device, such as a UE 115) a beam direction for later transmission or reception by the base station 105.

Some signals, such as data signals associated with a particular receiving device, may be transmitted by a base station 105 in a single beam direction (e.g., a direction associated with the receiving device, such as a UE 115). In some examples, the beam direction associated with transmissions along a single beam direction may be determined based on a signal that was transmitted in one or more beam directions. For example, a UE 115 may receive one or more of the signals transmitted by the base station 105 in different directions and may report to the base station 105 an indication of the signal that the UE 115 received with a highest signal quality or an otherwise acceptable signal quality.

In some examples, transmissions by a device (e.g., by a base station 105 or a UE 115) may be performed using multiple beam directions, and the device may use a combination of digital precoding or radio frequency beamforming to generate a combined beam for transmission (e.g., from a base station 105 to a UE 115). The UE 115 may report feedback that indicates precoding weights for one or more beam directions, and the feedback may correspond to a configured number of beams across a system bandwidth or one or more sub-bands. The base station 105 may transmit a reference signal (e.g., a cell-specific reference signal (CRS), a channel state information reference signal (CSI-RS)), which may be precoded or unprecoded. The UE 115 may provide feedback for beam selection, which may be a precoding matrix indicator (PMI) or codebook-based feedback (e.g., a multi-panel type codebook, a linear combination type codebook, a port selection type codebook). Although these techniques are described with reference to signals transmitted in one or more directions by a base station 105, a UE 115 may employ similar techniques for transmitting signals multiple times in different directions (e.g., for identifying a beam direction for subsequent transmission or reception by the UE 115) or for transmitting a signal in a single direction (e.g., for transmitting data to a receiving device).

A receiving device (e.g., a UE 115) may try multiple receive configurations (e.g., directional listening) when receiving various signals from the base station 105, such as synchronization signals, reference signals, beam selection signals, or other control signals. For example, a receiving device may try multiple receive directions by receiving via different antenna subarrays, by processing received signals according to different antenna subarrays, by receiving according to different receive beamforming weight sets (e.g., different directional listening weight sets) applied to signals received at multiple antenna elements of an antenna array, or by processing received signals according to different receive beamforming weight sets applied to signals received at multiple antenna elements of an antenna array, any of which may be referred to as "listening" according to different receive configurations or receive directions. In some examples, a receiving device may use a single receive configuration to receive along a single beam direction (e.g., when receiving a data signal). The single receive configuration may be aligned in a beam direction determined based on listening according to different receive configuration directions (e.g., a beam direction determined to have a highest signal strength, highest signal-to-noise ratio (SNR), or otherwise acceptable signal quality based on listening according to multiple beam directions).

The wireless communications system 100 may be a packet-based network that operates according to a layered protocol stack. In the user plane, communications at the bearer or Packet Data Convergence Protocol (PDCP) layer may be IP-based. A Radio Link Control (RLC) layer may perform packet segmentation and reassembly to communicate over logical channels. A Medium Access Control (MAC) layer may perform priority handling and multiplexing of logical channels into transport channels. The MAC layer may also use error detection techniques, error correction techniques, or both to support retransmissions at the MAC layer to improve link efficiency. In the control plane, the Radio Resource Control (RRC) protocol layer may provide establishment, configuration, and maintenance of an RRC connection between a UE 115 and a base station 105 or a core network 130 supporting radio bearers for user plane data. At the physical layer, transport channels may be mapped to physical channels.

The wireless communications system 100 may support sidelink communications between UEs 115 or other like devices over a sidelink channel. For example, the UEs 115 may be examples of vehicles, mobile devices, vulnerable road users (VRUs), roadside units (RSUs), and the like. The UEs 115 may include a communications manager 101 configured to perform the various operations and techniques described herein. For example, the first UE 115 may include a communications manager 101-a and the second UE 115 may include a communications manager 101-b configured to perform the various operations described herein. For example, a first UE 115 may receive, from a second UE 115, an SCI message indicating a set of resources reserved for the second UE 115 to transmit a subsequent communication (e.g., a first data message). Additionally or alternatively, the SCI message may indicate a first set of transmit beam directions associated with the second UE 115 (e.g., an SCI message may indicate directions in which the second UE 115 intends to transmit subsequent communications). The first UE 115 may determine a first receive beam direction for receiving such communications from the second UE 115 based on the SCI message (e.g., the first UE 115 may determine one or more receive beam directions that correspond to the indicated one or more transmit beam directions associated with the second UE 115).

The first UE 115 may transmit communications with other UEs 115 concurrent with receiving the communications from the second UE 115. For example, the first UE 115 may select a first transmit beam direction for transmitting the communications from a set of available directions. In some examples, the set of available directions for transmission at the first UE 115 may be different from (e.g., exclude) one or more receive beam directions associated with the first set of transmit beam directions of the second UE 115. Additionally or alternatively, the set of available directions may be different from one or more directions adjacent to the one or more receive beam directions. Such techniques may enable the first UE 115 to perform full duplex operations using the reserved set of resources while maintaining a relatively low likelihood of interference with the communications of the second UE 115 (e.g., self-interference between receiving a signal from the second UE and transmitting another signal on the same resources may satisfy a threshold). For example, the first UE 115 may use the first reserved set of resources to concurrently receive a first message from the second UE 115 in the first receive beam direction and transmit a second message in a selected transmit beam direction with relatively low interference between the first message and the second message. Such techniques may result in relatively efficient communications (e.g., higher spectrum efficiency, reduced latency, improved resource utilization, etc.).

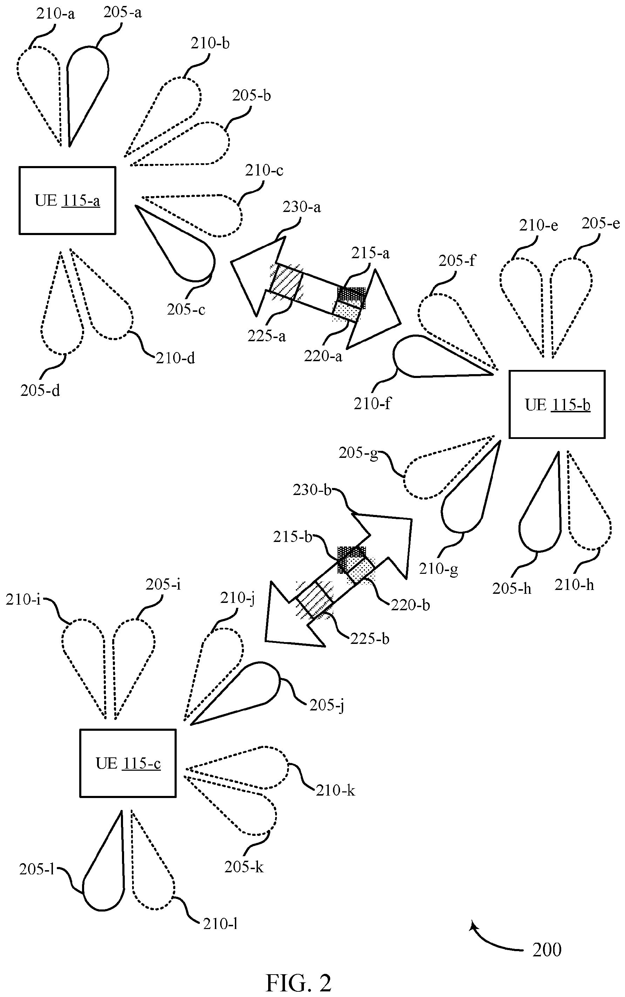

**FIG.** 2 illustrates an example of a wireless communications system 200 that supports beam based measurement and resource management techniques for wireless communications systems in accordance with aspects of the present disclosure. The wireless communications system 200 may implement aspects of the wireless communications system 100. For example, the wireless communications system 200 may include a UE 115 a, a UE 115 b, and a UE 115 c, which may be examples of corresponding devices described herein with reference to FIG. 1. For example, the UEs 115 may be examples of wireless devices (e.g., vehicles, mobile devices, VRUs, etc.).

In some examples, the wireless communications system 200 may be an example of a single frequency full duplex (SFFD) system, a sub-band based full duplex (SBFD) system, a V2X communications system, or a combination thereof, among other examples of wireless communications systems as described herein with reference to FIG. 1. In some examples, the UEs 115 may have the capability of half duplex communications (e.g., a UE 115 may be unable to perform concurrent transmission and reception operations). Additionally or alternatively, the UEs 115 may have the capability of full duplex communications (e.g., a UE 115 may perform concurrent transmission and reception operations). For example, the UE 115-b may be capable of concurrently (e.g., simultaneously) receiving a first message 215-a from the UE 115-a and a second message 220-b from the UE 115-c during same or overlapping durations of one or more TTIs (e.g., a same TTI). Additionally or alternatively, the UE 115-b may receive a first message 215-b from the UE 115-c and transmit a second message 220-a to the UE 115-a, although any combination of quantity of messages may be communicated. The wireless communications system 200 may support sidelink communications 230. For example, the UEs 115-a, 115-b, and 115-c may exchange sidelink communications (e.g., control information, data, messages, or other types of signaling) over a sidelink channel. As an illustrative example, the UEs 115-b and 115-c may communicate sidelink communications 230-b and the UEs 115-b and 115-a may communicate sidelink communications 230-a.

As an example, the UE 115-a may transmit communications using transmit beam directions 205-a, 205-b, 205-c, 205-d, or a combination thereof (e.g., the transmit beam directions 205 may be examples of different transmit beams or various directions for a single transmit beam or any combination thereof). For example, the UE 115-a may transmit sidelink communications using a transmit beam with a transmit beam direction 205-c to the UE 115-b and the UE 115-b may receive the communications using a receive beam with a receive beam direction of 205-f. Additionally or alternatively, the UE 115-a may receive sidelink communications 230 (e.g., the UE 115-b may communicate sidelink communications 230-a with the UE 115-a) using the receive beam directions 210-a, 210-b, 210-c, 210-d, or any combination thereof (e.g., the receive beam directions 210 may be examples of different receive beams or various directions for a single receive beam or any combination thereof). The UE 115-b and the UE 115-c may transmit communications using transmit beam directions 205-e, 205-f, 205-g, 205-h, 205-i, 205-j, 205-k, and 205-l. Additionally or alternatively, the UE 115-b and the UE 115-c may receive communications using receive beam directions 210-e, 210-f, 210-g, 210-h, 210-i, 210-j, 210-k, and 210-l. Although shown with four transmit beam directions 205 for one or more transmit beams of a respective UE 115 and four receive beam directions 210 for one or more receive beams of the UE 115 for illustrative clarity, it is to be understood that any quantity of beam directions, UEs 115, or other devices may be implemented in the wireless communications system 200.

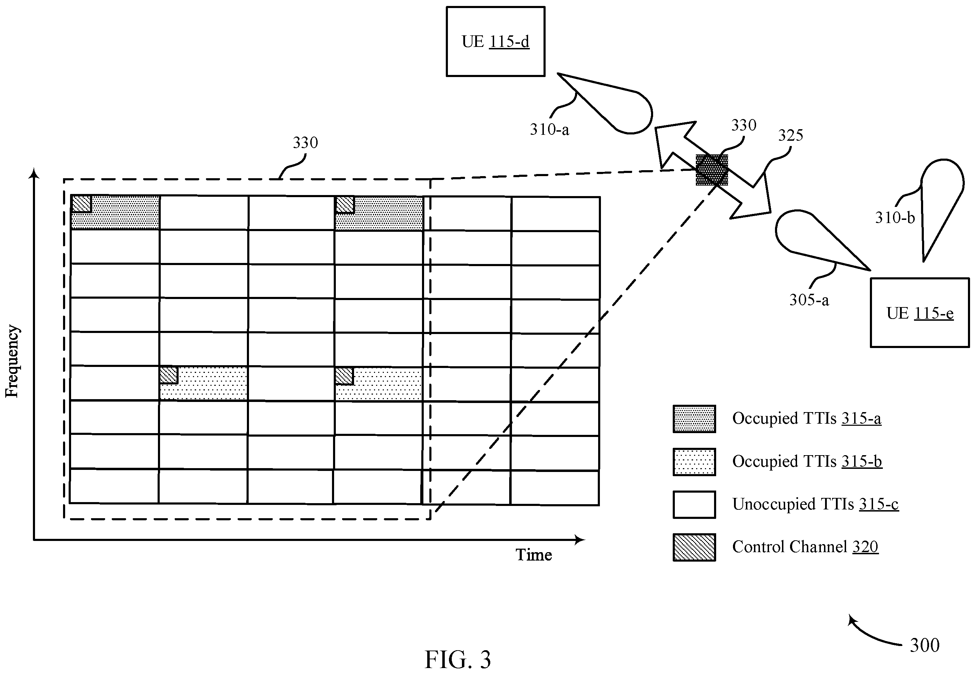

In some examples, the UEs 115 may reserve resources of a resource pool for the sidelink communications 230. The resource pool may be an example of a resource pool 330 as described with reference to FIG. 3. For example, the resource pool may include reserved resources (e.g., occupied or otherwise reserved sets of resources of the resource pool), unreserved resources (e.g., unoccupied resources or TTIs), control resources, or any combination thereof as described herein with reference to FIG. 3. In some examples, the resource pool may be referred to as a set of resources (e.g., a set of resources for sidelink communications 230). As an example of reserving resources, the UE 115-b may receive an SCI message 225-a from the UE 115-a. The SCI message 225-a may indicate a set of resources reserved for the UE 115-a to transmit a subsequent communication (e.g., a sidelink data message such as the first message 215-a). Stated another way, the transmitting UE 115 (e.g., the UE 115-a) may explicitly signal a resource reservation of the set of resources at a future time in the SCI message. In some examples, the UE 115-b may refrain from using the reserved set of resources for other communications based on receiving the SCI message 225-a. That is, the receiving UE (e.g., the UE 115-b) may avoid the reserved set of resources-along with resources used by the receiving UE to receive the SCI message 225-a -for transmitting or receiving messages with other UEs 115. The UE 115-a may experience less interference and fewer signal collisions while using the reserved set of resources to transmit the subsequent communications due to the UE 115-b refraining from communicating on the reserved set of resources. However, such systems may fail to support FD UEs 115 that can perform concurrent transmission and reception operations in the same or adjacent resources. For example, a FD UE 115 may be configured to refrain from transmitting a second message on resources that the FD UE 115 is receiving a first message, which may reduce spectral efficiency or resource utilization of the system.

In accordance with the techniques described herein, the wireless communications system 200 may support beam based measurement and resource management techniques for FD communications between the UEs 115. For example, the wireless communications system 200 may support SCI messages 225 that indicate transmit beam directions 205, receive beam directions 210, or both that correspond to a resource reservations. Additionally or alternatively, the wireless communications system 200 may support resource selection, transmit beam selection, or both based on a self-interference measurement procedure. In some examples, the UEs 115 may be preconfigured to perform the techniques described herein. Additionally or alternatively, the UEs 115 may receive control signaling indicating one or more configurations for performing the techniques described herein For example, a UE 115 may receive an indication (e.g., a DCI message, an RRC message, a MAC-CE message, or any combination thereof) of a configuration to indicate or determine transmit beam directions with an associated resource reservation message.

As an illustrative example, the UE 115-a may transmit a first SCI message 225-a indicating a first set of resources (e.g., future resources which may be referred to as "a") to the UE 115-b. The first set of resources may be future resources reserved for the UE 115-a to transmit subsequent communications in a future TTI such as a slot. For example, the first set of resources may be an example of occupied TTIs 315 as described with reference to FIG. 3. As an example, the resources may be shown in the equation *a* = {*a*₁, *a*₂ ... *aₙ*}, where *a* represents a range of frequency resources and n represents a respective TTI for the range of frequency resources. Additionally or alternatively, the first SCI message 225-a may indicate one or more transmit beam directions 205 of the first UE 115-a. For example, the SCI message 225-a may indicate a first transmit beam direction 205-c in which the UE 115-a intends to transmit a first subsequent communication, a second transmit beam direction 205 (e.g., the transmit beam direction 205-c, the transmit beam direction 205-b, and the like) in which the UE 115-a intends to transmit a second subsequent communication, etc. In some examples, the SCI message 225-a may indicate a single transmit beam direction 205 for each resource of the first set of resources. In some other examples, the SCI message may indicate multiple transmit beam directions 205 for the first set of resources (e.g., resources *a*₁ at a first time may be associated with a first transmit beam direction 205-c, resources *a*₂ at a second time may be associated with a second transmit beam direction 205-d, etc.).

Thus, the UE 115-b may obtain resource reservation information along with transmit beam information from the UE 115-a based on decoding the first SCI message. The UE 115-b may determine one or more receive beam directions 210 based on the indicated one or more transmit beam directions. For example, the UE 115-b may determine a first receive beam direction 210 (e.g., the receive beam direction 210-f of the UE 115-b) for receiving the first communication from the UE 115-a (e.g., the first message 215-a) based at least in part on a first indicated transmit beam direction 205 (e.g., the transmit beam direction 205-c of the UE 115-a). As an illustrative example, the UE 115-b may determine to use a receive beam direction 210-f for receiving the first message 215-a from the UE 115-a based on the UE 115-a indicating a transmit beam direction of 205-c that corresponds to the receive beam direction 210-f (e.g., the receive beam direction 210-f may result in a relatively high signal quality for signals from the transmit beam direction 205-c). Additionally or alternatively, the UE 115-b may determine one or more transmit beam directions 205 for transmitting other communications, for instance, concurrently with receiving the first communication from the UE 115-a. For example, the UE 115-b may determine a first transmit beam direction 205 (e.g., 205-h, 205-g, etc.) for transmitting a second message 220-b to the UE 115-c on the set of resources reserved by the UE 115-a (e.g., a TTI reserved by the UE 115-a as described herein, for example, with reference to FIG. 3).

In some examples, the first transmit beam direction 205 determined by the UE 115-b may be different from the determined one or more receive beam directions 210. For example, the UE 115-b may use the first reserved set of resources *a* to concurrently receive the first communication (e.g., a first message) in the first receive beam direction 210-f and transmit other communications (e.g., a second message, a third message, etc.) in the first transmit beam direction 205-h. By selecting a transmit beam direction 205 different than the receive beam direction 210 or a direction adjacent to the receive beam direction 210, the UE 115-b may perform FD operations while realizing relatively low interference or signal collisions with the communications from the UE 115-a. Thus, when excluding resources reserved by the UE 115-a, the UE 115-b may consider not only resources reserved by the UE 115-a but also the transmit beam directions in which the UE 115-a intends to use the reserved resources. As such, the UE 115-b may still use the first reserved set of resources *a* to transmit other communications in transmit beam directions 205 that are different from one or more receive beam directions 210 (e.g., corresponding to an indicated first set of transmit beam directions) rather than excluding the first reserved set of resources *a* from a set of possible resources for FD communications.

In some examples, the UE 115-b may use a second receive beam direction 210 (e.g., a receive beam configured to the receive beam direction 210-f or 210-e) to decode the first SCI message 225-a transmitted by the UE 115-a. The second receive beam direction 210 may be the same or different from the first receive beam direction 210-f for receiving subsequent communications (or a set of other receive beam directions 210) such as the first message 215-a. In some aspects, the UE 115-b may decode the first SCI message 225-a based on the first SCI message 225-a satisfying a reference signal received power (RSRP) threshold. For example, the UE 115-b may monitor resources and detect the first SCI message 225-a based on the satisfied RSRP threshold, and the UE 115-b may decode the first SCI message 225-a. In some examples, the second receive beam may be the index of a receive code book. The UE 115-b may identify (e.g., determine) the first reserved set of resources *a* and the first set of transmit beam directions from the first SCI message 225-a. The UE 115-b may additionally or alternatively identify the first receive beam direction for receiving the communications from the UE 115-a based on the second receive beam direction 210 used to decode the first SCI message 225-a, the indication of the first set of transmit beam directions 205, or a combination thereof.

In some examples, the second receive beam direction 210-f used to decode the SCI message 225-a may be used for determining a receive beam direction 210 used for receiving one or more messages 215. For example, the second receive beam direction 210-f (i.e., the current beam direction for receiving the SCI message 225-a) may be the same as the first receive beam direction 210 for receiving the first message 215-a (e.g., the UE 115-b may use the receive beam direction 210-f for both receiving the SCI message 225-a and the first message 215-a). In some other examples, the indication of the first set of transmit beam directions 205 of the UE 115-a may be relative to the first transmit beam direction 205-c of the UE 115-a for transmitting the SCI message 225-a (e.g., the current beam direction the UE 115-a is using to transmit the SCI message 225-a may be the transmit beam direction 205-c). For example, the SCI message 225-a may indicate an adjustment from the current transmit beam direction 205-c as the intended transmit beam directions 205 for subsequent communications (e.g., a field in the SCI message may indicate that subsequent transmit beam directions 205 may be adjusted a quantity of degrees from the current transmit beam direction 205). As an example, the UE 115-a may indicate that the one or more intended transmit beam directions for the first message 215-a are the transmit beam direction 205-b and 205-d by indicating an adjustment relative to the transmit beam direction 205-c. Accordingly, the UE 115-b may determine the first receive beam direction 210 (e.g., the receive beam direction 210-e of the UE 115-b may be used based on the transmit beam direction 205-b of the UE 115-a being indicated) as the receive beam direction 210-f adjusted by one or more parameters indicated by the SCI message 225-a. The UE 115-b may select the first transmit beam direction 205 for FD communications from a set of available directions. In some aspects, the set of available directions may exclude the first receive beam direction 210 (e.g., the receive beam direction 210-f), the second receive beam direction (e.g., the receive beam direction 210-f or another receive beam direction corresponding to an indicated transmit beam direction of the UE 115-a), one or more directions adjacent to the first receive beam direction (e.g., the receive beam directions 210-g or 210-e), one or more directions adjacent to the second receive beam direction, or any combination thereof. The set of available directions may include all other directions.

As an illustrative example, the UE 115-b may select the transmit beam direction 205-h for FD communications on the first set of resources based on the transmit beam direction 205-h being included in the set of available directions, a self-interference measurement procedure, or any combination thereof (e.g., the UE 115-b may select the transmit beam direction 205-h for transmitting the second message 220-b to the UE 115-c concurrent with receiving the first message 215-a from the UE 115-a using the receive beam direction 210-f). For instance, the UE 115-b may use the receive beam direction 210-f to decode the SCI message 225-a transmitted by the UE 115-a and may use the receive beam direction 210-e to receive a subsequent communication from the UE 115-a. In such an example, the UE 115-b may refrain from using the first reserved set of resources *a* to transmit messages or other communications in the transmit beam direction 205-f, the transmit beam direction 205-e, or both because the transmit beam directions 205-f and 205-e coincide with the receive beam directions 210-f and 210-e. Additionally or alternatively, the UE 115-b may refrain from using the first reserved set of resources *a* to transmit other communications in the transmit beam direction 205-g because the transmit beam direction 205-g is adjacent to the receive beam direction 210-f. As such, the set of available directions for the UE 115-b may exclude the transmit beam directions 205-f, 205-e, and 205-g and may include the transmit beam direction 205-h. Thus, in some examples, the UE 115-b may select the transmit beam direction 205-h from the set of available directions because the transmit beam direction 205-h is different from (e.g., neither coincides with nor is adjacent to) the receive beam directions 210-f and 210-e.

In some examples, the UE 115-b may experience self-interference while using the first reserved set of resources *a* to concurrently receive the first subsequent transmission in the first receive beam direction 210 and transmit other communications in the selected first transmit beam direction 205. The experienced self-interference may, in some examples, be caused by leakage from a first receive beam (e.g., the receive beam corresponding to the first or second receive beam direction 210) onto the first transmit beam direction (e.g., the transmit beam corresponding to the selected transmit beam direction 205) or vice versa. In some examples, the UE 115-b may perform one or more self-interference measurements between the first receive beam direction 210 and the set of available directions. In some examples, performing the one or more self-interference measurements may include selecting the self-interference measurements from a set of preconfigured values corresponding to a set of potential beam pairs. The set of potential beam pairs may be referred to as *tₖ, rₖ,* where *t* represents a transmit beam and *r* represents a receive beam. Each potential beam pair *tₖ, rₖ* may include a potential receive beam direction 210 (e.g., *rₖ*) from a set of potential receive beam directions 210 and a potential transmit beam direction 205 (e.g., *tₖ*) from the set of available directions. The UE 115-b may generate the set of preconfigured values corresponding to the set of potential beam pairs *tₖ, rₖ* based on measuring, for each potential beam pair *tₖ, rₖ* at the UE 115-b, a side lobe power (e.g., leakage) received in the potential receive beam direction *rₖ* from the potential transmit beam direction *tₖ* (and vice versa) while using one or more sets of resources. Based on performing the one or more self-interference measurements, the UE 115-b may select, from the set of available directions, the first transmit beam direction 205 such that leakage between the first transmit beam direction 205 and the first receive beam direction 210 satisfies a threshold. For example, the UE 115-b may select a transmit beam direction 205 that results in a measurement that satisfies a threshold, or a transmit beam direction 205 that results in a lowest measurement of each of the measurements for the beam pairs (e.g., the UE 115-b may select the transmit beam direction 205-h based on the beam pair of a receive beam for the receive beam direction 210-f and a transmit beam for the transmit beam direction 205-h satisfying a threshold). As an illustrative example, the various directions for receive beams or transmit beams that are selected for communications by the UEs 115 are shown with solid lines in FIG. 2 from the set of possible directions shown by dashed lines, although any directions may be selected, different quantities of directions may be selected, or a combination thereof.

In some examples, based on receiving the first SCI message 225-a, the UE 115-b may determine a set of available resources that excludes the first reserved set of resources a, the resources associated with the first SCI message 225-a (e.g., resources used by the UE 115-a to transmit the first SCI message), one or more resources adjacent to the first reserved set of resources *a*, one or more resources adjacent to the resources associated with the first SCI message, or a combination thereof. The set of available resources may include remaining resources. The UE 115-b may use the set of available resources to transmit other communications in the set of available directions. In some aspects, the set of available directions may exclude the determined receive beam direction 210 or one or more directions adjacent to the first receive beam direction 210 or a combination thereof. The set of available directions may include all other directions. As such, the UE 115-b may refrain from using the set of available resources to transmit other communications along directions excluded from the set of available directions. Stated another way, the UE 115-a may refrain from using the first reserved set of resources *a* and one or more additional resources outside the first reserved set of resources *a* (e.g., resources *b* that are adjacent to the resources *a* and excluded from the set of available resources) to transmit other communications along the first receive beam direction 210 and one or more beam directions adjacent to the first receive beam direction 210. The UE 115-b may consider the set of available resources as available for transmitting other communications in the set of available directions.

In some examples, the UE 115-b may also receive, from the UE 115-c, a second SCI message 225-b indicating a second set of resources reserved for the UE 115-c to transmit a respective communication (e.g., a message 215-b may be transmitted via occupied TTIs as described herein with reference to FIG. 3) and a second set of transmit beam directions 205 in which the UE 115-c intends to transmit the respective communications (e.g., the SCI message 225-b may indicate the transmit beam direction 205-j). In some aspects, the UE 115-b may use a third receive beam direction 210 to decode the second SCI message 225-b. For example, the second SCI message 225-b may indicate that the UE 115-c intends to transmit a message 215-b in the transmit beam directions 205-i or 205-k. The UE 115-c may transmit the second SCI message 225-b in the transmit beam direction 205-j and, accordingly, the UE 115-b may use the receive beam direction 210-g to decode the second SCI message 225-b (e.g., the receive beam direction 210-g may correspond to the transmit beam direction 205-j). The UE 115-b may use the third receive beam to infer the second set of transmit beam directions. Stated another way, the UE 115-b may receive resource reservation information along with transmit beam information from both the UE 115-a and the UE 115-c, respectively, as part of SCI decoding.

In some examples, based on determining both the first set of transmit beam directions 205 associated with the UE 115-a and the second set of transmit beam directions 205 associated with the UE 115-c, the UE 115-b may determine a coordinated receive beam direction 210 for receiving both the first message from the UE 115-a and the third message from the UE 115-c. For example, if the first set of transmit beam directions 210 includes the transmit beam direction 205-c and the second set of transmit beam directions 210 includes the transmit beam direction 205-j, the UE 115-b may, in some examples, determine the receive beam direction 210-f to be the coordinated receive beam direction. In some other examples, the UE 115-b may determine the combination of the receive beam directions 210-f and 210-g (corresponding to the transmit beam directions 205-j and 205-c). The UE 115-b may receive both the first message and the third message in the coordinated receive beam direction 210 (e.g., the coordinated receive beam direction may be a direction with an RSRP that satisfies an RSRP threshold). In some examples, the coordinated receive beam direction may be the first receive beam direction (e.g., the direction in which the UE 115-b may receive the first message from the UE 115-a), the second receive beam direction (e.g., the direction in which the UE 115-b received the second SCI message from the UE 115-c), another receive beam direction 210, or any combination thereof. The UE 115-b may use a coordinated set of resources (e.g., *a_{c}*) to perform concurrent transmission and reception operations with the UEs 115-a and 115-c. For example, the UE 115-b may use the coordinated set of resources *a_{c}* to receive the first message from the UE 115-a and the second message from the UE 115-c while concurrently transmitting other communications via transmit beams in a direction from a set of directions (e.g., different than the receive beam directions 210) as described herein.

In some examples, the coordinated set of resources *a_{c}* may include the first reserved set of resources *a*, the second reserved set of resources, one or more resources adjacent to the first reserved set of resources *a*, one or more resources adjacent to the second reserved set of resources, or a combination thereof. For example, the coordinated set of resources may include the occupied TTIs 315-a associated with the UE 115-a and the occupied TTIs 315-b associated with the UE 115-b, in addition or alternative to any unoccupied TTIs 315-c adjacent to the occupied TTIs as shown with reference to FIG. 3). Stated another way, the coordinated set of resources *a_{c}* may include any resources indicated by the UEs 115-a and 115-c and the coordinated receive beam direction 210 may include any beam direction indicated by the UEs 115-a and 115-c. In some examples, the UE 115-b may exclude the coordinated set of resources *a_{c}* along the coordinated receive beam direction 210. That is, the UE 115-b may use the coordinated set of resources *a_{c}* along beam directions different from the coordinated receive beam direction 210 to transmit other communications. As such, the set of available resources associated with the UE 115-b may, in some examples, include the coordinated set of resources *a_{c}*. Likewise, the set of available directions associated with the UE 115-b may exclude the coordinated receive beam direction 210 and include remaining directions (e.g., all other directions). Other possibilities for including or excluding resources in the set of available resources or directions in the set of available directions are not precluded. For example, the UE 115-a may exclude all of the coordinated set of resources *a_{c}* from the set of available resources and may consider the coordinated set of resources *a_{c}* to be unavailable for transmitting other communications in any directions.

In some examples, based on the coordinated receive beam direction 210, the UE 115-b may perform one or more self-interference measurements to determine the first transmit beam direction 205 (e.g., for concurrent FD transmissions during the set of resources) such that leakage between the coordinated receive beam direction 210 and the first transmit beam direction 205 satisfies a threshold (e.g., reduced). Additionally or alternatively, the UE 115-b may select the first transmit beam direction 205 from the set of available directions based on using the coordinated receive beam direction 210 to identify the set of available directions. Accordingly, the UE 115-b may use the set of available resources to perform FD communications with other UEs 115 in the set of available directions. In some examples, the UE 115-b may transmit, to the UE 115-a, the UE 115-c, or both, a third SCI message indicating a subset of the set of available resources and a subset of the set of available directions in which the UE 115-b intends to transmit other communications (e.g., as part of a future reservation). For example, the UE 115-b may reserve resources of a resource pool that are not occupied (e.g., available) and broadcast the third SCI message (not shown) indicating the reserved resources, one or more transmit beam directions 205 associated with the reserved resources, or a combination thereof as described herein.

**FIG. 3** illustrates an example of a wireless communications system 300 that supports beam based measurement and resource management techniques for wireless communications systems in accordance with aspects of the present disclosure. In some examples, the wireless communications system 300 may implement aspects of wireless communications systems 100 or 200, or may be implemented by a UE 115 (or other wireless device), as described herein. For example, the wireless communications system 300 may include UEs 115-d and 115-e, which may be examples of UEs 115 as described herein. The wireless communications system 300 may illustrate an example of sidelink communications 325 over a resource pool 330, which may be referred to as a set of resources or multiple sets of resources.

The resource pool 330 may be maintained by one or more UEs 115 (e.g., UEs 115 in a V2X system or another system that supports sidelink communications). The UEs 115 may be examples of the UEs 115 as described in FIG. 2 (e.g., UE 115-e may be an example of the UE 115-b and the UE 115-d may be an example of the UE 115-a). For example, the UE 115-d and the UE 115-e may maintain the resource pool 330 for the sidelink communications 325. The resource pool 330 may indicate resources occupied, unoccupied, or reserved by the UEs 115. The resource pool 330 may include multiple TTIs 315 (slots, mini-slots, symbols, etc.) and may span a portion of a frequency band (a channel, a carrier, a subcarrier, etc.), as shown, though any granularity or example of time resources or frequency resources may be used. The resource pool 330 may include occupied TTIs 315-a and 315-b, which may be occupied or reserved for future communications by other UEs 115 in the system. The resource pool 330 may also include unoccupied TTIs 315-d, which may not be reserved by other UEs in the system (e.g., the unoccupied TTIs 315-d may be sets of resources that are available for reservation.

The resource pool 330 may be generated at a UE 115 based on control information (e.g., SCI messages as described with reference to FIG. 2) or reservation information from other UEs. For instance, the UE 115-e may receive one or more control messages from another UE (e.g., the UE 115-d) via the control channels 320 of the resource pool 330, which may be decoded by the UE 115-e to determine the resources reserved by the other UEs 115, one or more transmit directions of the UE 115 transmitting the respective SCI message (e.g., the UE 115-d), or a combination thereof. Additionally or alternatively, the UE 115-e may receive a reservation indication from the UE 115-d, which may explicitly indicate the resources reserved by the UE 115-d. In some examples, the UE 115-d may receive the reservation indication via a control channel 320. As additional signals are received, the UE may update the resource pool 330 based on the reserved resources determined from the received signals. In some examples, the occupied TTIs 315-a may be examples of reserved resources of the UE 115-d and the occupied TTIs 315-b may be examples of reserved resources of another UE 115 (not shown).

In accordance with the techniques described herein, the UE 115-e may receive a first SCI message via a control channel 320 of an occupied TTI 315-a from the UE 115-d indicating reserved resources associated with the UE 115-d (e.g., occupied TTIs 315-a). Additionally or alternatively, the UE 115-e may receive second SCI from a third UE indicating reserved resources associated with the third UE (e.g., occupied TTIs 315-b). The first SCI may include an indication of one or more transmit directions associated with the UE 115-d. For example, the first SCI may indicate a direction of the transmit beam 310-a used for transmitting the first SCI, or one or more other directions for subsequent communications over the reserved resources (e.g., a first instance of the occupied TTIs 315-a may use the current direction of the transmit beam 310-a and a second instance of the occupied TTIs 315-a may use the same direction or a different direction indicated by the first SCI). As merely one example, the UE 115-d may transmit the SCI using the transmit beam 310-a with a first direction and the UE 115-e may determine that each of the communications from the UE 115-d may be transmitted using the first direction, although any combination of directions may be used as described with reference to FIG. 2. The UE 115-e may determine a receive beam direction for the communications via the occupied TTIs 315-a, which may be referred to as a first set of resources. For example, the UE 115-e may select a second direction associated with the receive beam 305-a of the UE 115-e for receiving communications from the UE 115-d (e.g., the first direction of the transmit beam 310-a of the UE 115-d may be an opposite or corresponding direction to the second direction of the receive beam 305-a of the UE 115-e).

The UE 115-e may select a transmit beam direction as described with reference to FIG. 2 based on the receive beam direction (e.g., the direction of the receive beam 305-a of the UE 115-e). For example, the UE 115-e may select a transmit beam direction for the transmit beam 310-b as described herein (e.g., based on one or more measurements of the beam pair of the receive beam 305-a direction and the transmit beam 310-b direction satisfying one or more thresholds). As an illustrative example, the UE 115-e may select the direction for the transmit beam 310-b from a set of possible directions and transmit FD communications. As such, the UE 115-e may receive a message (e.g., a first message as described with reference to FIG. 2) from the UE 115-d via the reserved resources of the UE 115-d (e.g., occupied TTIs 315-a). As an example of FD communications, the UE 115-e may concurrently transmit another message to another UE 115 via the resources reserved by the UE 115-d (e.g., the occupied TTIs 315-a) using the transmit beam direction 310-b based on the direction satisfying one or more thresholds as described herein with reference to FIG. 2.

Additionally or alternatively, second SCI from a third UE 115 may include an indication of one or more transmit directions associated with the third UE 115. The UE 115-e may determine a receive beam direction (or directions) for the communications via the occupied TTIs 315-b, which may be referred to as a second set of resources. The UE 115-e may select a transmit beam direction as described with reference to FIG. 2 based on the receive beam direction. For example, the UE 115-e may transmit FD communications via the occupied TTIs 315-b using the selected transmit beam direction (or directions). Additionally or alternatively, the UE 115-e may use unoccupied TTIs 315-c (e.g., including or excluding TTIs adjacent to the reserved resources) for such full duplex communications, as described with reference to FIG. 2.

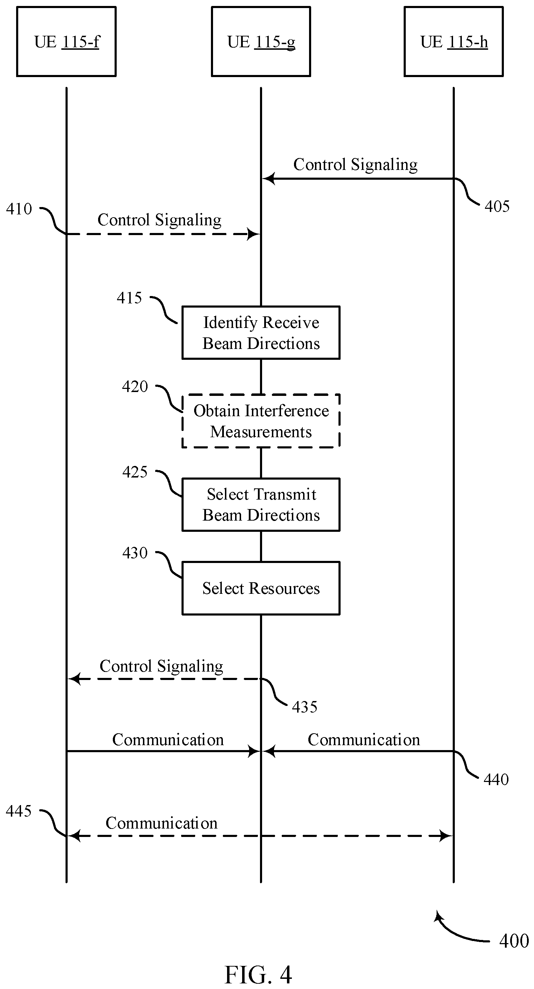

**FIG. 4** illustrates an example of a process flow 400 that supports beam based measurement and resource management techniques for wireless communications systems in accordance with aspects of the present disclosure. In some examples, the process flow 400 may implement or be implemented by aspects of wireless communications systems 100 or 200. For example, the process flow 400 may be implemented by a UE 115-f, a UE 115-g, and a UE 115-h, which may each represent an example of a UE 115 described herein with reference to FIGs. 1 and 2. The process flow 400 may be implemented by the UE 115-f, the UE 115-g, and the UE 115-h, for example, to perform FD communications. Additionally, alternative examples of the following operations may be implemented, where some operations may be performed in a different order than described or are not performed at all. In some examples, the following operations may include additional features not mentioned below, or further processes or communications may be added.

At 405, the UE 115-h may transmit control signaling to the UE 115-g. The control signaling may be an example of sidelink control signaling. For example, the UE 115-h may transmit SCI to the UE 115-g as described herein with reference to FIG. 2. The SCI may indicate resources reserved by the UE 115-h, one or more transmit directions associated with the UE 115-h (e.g., directions of transmit beams for communicating to the UE 115-g on the reserved resources), or a combination thereof.

In some examples, at 410 the UE 115-f may transmit control signaling to the UE 115-g. For example, the UE 115-f may transmit second SCI indicating a second set of reserved resources for the UE 115-f, one or more transmit directions associated with the UE 115-f, or a combination thereof as described herein with reference to FIG. 2.

At 415, the UE 115-g may identify receive beam directions based on receiving the SCI. For example, the UE 115-g may identify one or more receive beam directions for receiving communications from the UE 115-h (e.g., receive beam directions that correspond to a first set of transmit directions for the UE 115-h), one or more receive beam directions for receiving communications from the UE 115-f (e.g., receive beam directions that correspond to a second set of transmit directions for the UE 115-f), or any combination thereof. In some examples, at 420 the UE 115-g may obtain interference measurements. For example, the UE 115-g may determine interference measurements between the one or more receive beam directions and a set of possible transmit beam directions.

At 425, the UE 115-g may select transmit beam directions based on the received SCI, interference measurements, or both. For example, the UE 115-g may select a transmit beam direction for FD communications via the reserved resources indicated by the one or more SCI messages. In some examples, the transmit beam direction may be different than the one or more receive beam directions, directions adjacent to the one or more receive beam directions, or a combination thereof. In some examples, the UE 115-g selects the transmit beam direction associated with an interference measurement that satisfies a threshold as described herein. At 430, the UE 115-g may select resources based on the received SCI. For example, the UE 115-g may select the resources reserved by the UEs 115-f and 115-h (e.g., if the transmit beam direction is different from the receive beam direction or satisfies an interference threshold), or the UE 115-g may select resources different from the reserved resources and/or resources adjacent to the reserved resources (e.g., if the transmit beam direction is the same as the receive beam direction or an adjacent direction).

In some examples, at 435 the UE 115-g may transmit control signaling. For example, the UE 115-g may send SCI indicating the reserved resources, the selected transmit beam directions, or both. At 440, the UE 115-g may receive communications from the UE 115-h, the UE 115-f, or both via the first set of reserved resources, the second set of reserved resources, or both using the identified one or more receive beam directions. Additionally or alternatively, at 445 the UE 115-g may transmit communications to the UE 115-h, the UE 115-f, or both using the selected one or more transmit beam directions. In some examples, the UE 115-g may transmit the communications on the same resources for receiving the communications at 440 (e.g., the UE 115-g may perform FD operations).

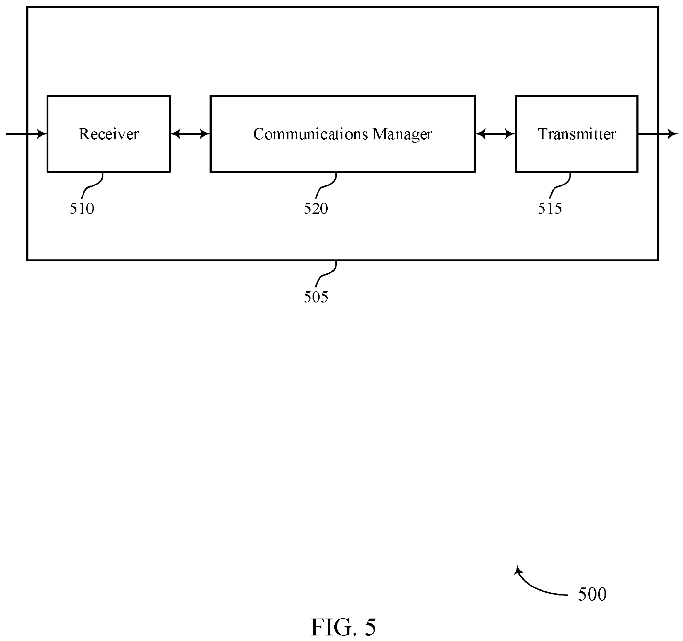

**FIG. 5** shows a block diagram 500 of a device 505 that supports beam based measurement and resource management techniques for wireless communications systems in accordance with aspects of the present disclosure. The device 505 may be an example of aspects of a UE 115 as described herein. The device 505 may include a receiver 510, a transmitter 515, and a communications manager 520. The device 505 may also include a processor. Each of these components may be in communication with one another (e.g., via one or more buses).

The receiver 510 may provide a means for receiving information such as packets, user data, control information, or any combination thereof associated with various information channels (e.g., control channels, data channels, information channels related to beam based measurement and resource management techniques for wireless communications systems). Information may be passed on to other components of the device 505. The receiver 510 may utilize a single antenna or a set of multiple antennas.

The transmitter 515 may provide a means for transmitting signals generated by other components of the device 505. For example, the transmitter 515 may transmit information such as packets, user data, control information, or any combination thereof associated with various information channels (e.g., control channels, data channels, information channels related to beam based measurement and resource management techniques for wireless communications systems). In some examples, the transmitter 515 may be co-located with a receiver 510 in a transceiver module. The transmitter 515 may utilize a single antenna or a set of multiple antennas.

The communications manager 520, the receiver 510, the transmitter 515, or various combinations thereof or various components thereof may be examples of means for performing various aspects of beam based measurement and resource management techniques for wireless communications systems as described herein. For example, the communications manager 520, the receiver 510, the transmitter 515, or various combinations or components thereof may support a method for performing one or more of the functions described herein.

In some examples, the communications manager 520, the receiver 510, the transmitter 515, or various combinations or components thereof may be implemented in hardware (e.g., in communications management circuitry). The hardware may include a processor, a digital signal processor (DSP), an application-specific integrated circuit (ASIC), a field-programmable gate array (FPGA) or other programmable logic device, a discrete gate or transistor logic, discrete hardware components, or any combination thereof configured as or otherwise supporting a means for performing the functions described in the present disclosure. In some examples, a processor and memory coupled with the processor may be configured to perform one or more of the functions described herein (e.g., by executing, by the processor, instructions stored in the memory).

Additionally or alternatively, in some examples, the communications manager 520, the receiver 510, the transmitter 515, or various combinations or components thereof may be implemented in code (e.g., as communications management software or firmware) executed by a processor. If implemented in code executed by a processor, the functions of the communications manager 520, the receiver 510, the transmitter 515, or various combinations or components thereof may be performed by a general-purpose processor, a DSP, a central processing unit (CPU), an ASIC, an FPGA, or any combination of these or other programmable logic devices (e.g., configured as or otherwise supporting a means for performing the functions described in the present disclosure).

In some examples, the communications manager 520 may be configured to perform various operations (e.g., receiving, monitoring, transmitting) using or otherwise in cooperation with the receiver 510, the transmitter 515, or both. For example, the communications manager 520 may receive information from the receiver 510, send information to the transmitter 515, or be integrated in combination with the receiver 510, the transmitter 515, or both to receive information, transmit information, or perform various other operations as described herein.

The communications manager 520 may support wireless communications at a first UE in accordance with examples as disclosed herein. For example, the communications manager 520 may be configured as or otherwise support a means for receiving, from a second UE, sidelink control information for performing full-duplex communications with the second UE, the sidelink control information including an indication of resources reserved by the second UE and an indication of one or more transmit beam directions associated with the resources reserved by the second UE. The communications manager 520 may be configured as or otherwise support a means for receiving, via the resources reserved by the second UE, a first message using a first receive beam based on the sidelink control information. The communications manager 520 may be configured as or otherwise support a means for transmitting, via the resources reserved by the second UE, a second message using a first transmit beam of the first UE, a direction of the first transmit beam being different from a direction of the first receive beam.

Additionally or alternatively, the communications manager 520 may support wireless communications at a first UE in accordance with examples as disclosed herein. For example, the communications manager 520 may be configured as or otherwise support a means for transmitting, to a second UE, sidelink control information including an indication of resources reserved by the first UE and an indication of one or more transmit beam directions associated with the resources reserved by the first UE. The communications manager 520 may be configured as or otherwise support a means for transmitting, via the resources reserved by the first UE, a first message to the second UE using a first transmit beam, the first transmit beam having a first transmit beam direction based at least in part on the indication of the one or more transmit beam directions.

By including or configuring the communications manager 520 in accordance with examples as described herein, the device 505 (e.g., a processor controlling or otherwise coupled to the receiver 510, the transmitter 515, the communications manager 520, or a combination thereof) may support techniques for beam based measurement and resource management techniques as described herein. For example, the device 505 may support SCI that indicates one or more transmit beam directions in addition or alternative to an indication of resource resources. Such techniques may enable the device 505 to utilize reserved resources for FD operations while maintaining a relatively low interference, which may result in efficient resource utilization and communications.

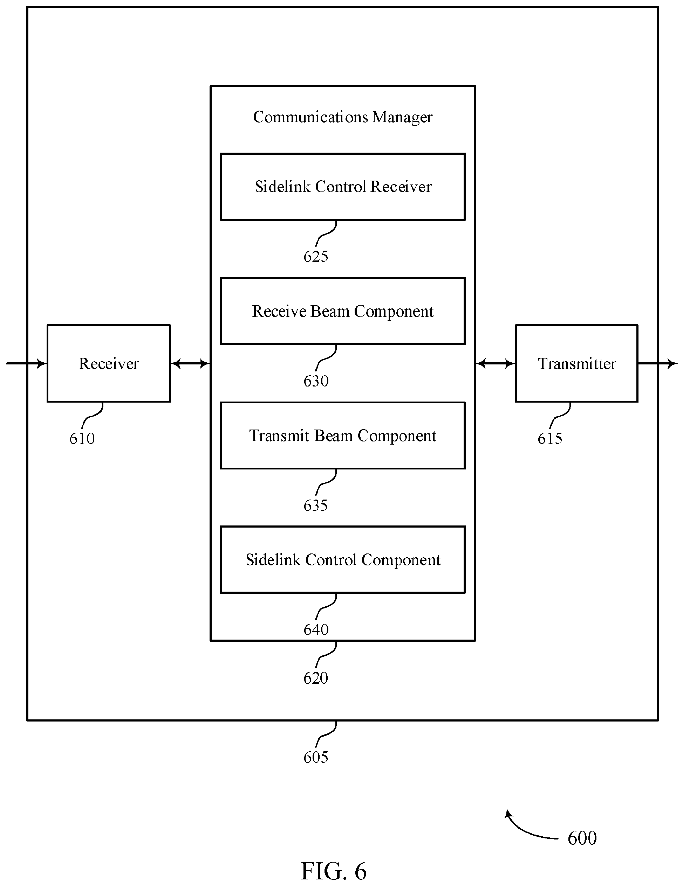

**FIG. 6** shows a block diagram 600 of a device 605 that supports beam based measurement and resource management techniques for wireless communications systems in accordance with aspects of the present disclosure. The device 605 may be an example of aspects of a device 505 or a UE 115 as described herein. The device 605 may include a receiver 610, a transmitter 615, and a communications manager 620. The device 605 may also include a processor. Each of these components may be in communication with one another (e.g., via one or more buses).

The receiver 610 may provide a means for receiving information such as packets, user data, control information, or any combination thereof associated with various information channels (e.g., control channels, data channels, information channels related to beam based measurement and resource management techniques for wireless communications systems). Information may be passed on to other components of the device 605. The receiver 610 may utilize a single antenna or a set of multiple antennas.

The transmitter 615 may provide a means for transmitting signals generated by other components of the device 605. For example, the transmitter 615 may transmit information such as packets, user data, control information, or any combination thereof associated with various information channels (e.g., control channels, data channels, information channels related to beam based measurement and resource management techniques for wireless communications systems). In some examples, the transmitter 615 may be co-located with a receiver 610 in a transceiver module. The transmitter 615 may utilize a single antenna or a set of multiple antennas.

The device 605, or various components thereof, may be an example of means for performing various aspects of beam based measurement and resource management techniques for wireless communications systems as described herein. For example, the communications manager 620 may include a sidelink control receiver 625, a receive beam component 630, a transmit beam component 635, a sidelink control component 640, or any combination thereof. The communications manager 620 may be an example of aspects of a communications manager 520 as described herein. In some examples, the communications manager 620, or various components thereof, may be configured to perform various operations (e.g., receiving, monitoring, transmitting) using or otherwise in cooperation with the receiver 610, the transmitter 615, or both. For example, the communications manager 620 may receive information from the receiver 610, send information to the transmitter 615, or be integrated in combination with the receiver 610, the transmitter 615, or both to receive information, transmit information, or perform various other operations as described herein.

The communications manager 620 may support wireless communications at a first UE in accordance with examples as disclosed herein. The sidelink control receiver 625 may be configured as or otherwise support a means for receiving, from a second UE, sidelink control information for performing full-duplex communications with the second UE, the sidelink control information including an indication of resources reserved by the second UE and an indication of one or more transmit beam directions associated with the resources reserved by the second UE. The receive beam component 630 may be configured as or otherwise support a means for receiving, via the resources reserved by the second UE, a first message using a first receive beam based on the sidelink control information. The transmit beam component 635 may be configured as or otherwise support a means for transmitting, via the resources reserved by the second UE, a second message using a first transmit beam of the first UE, a direction of the first transmit beam being different from a direction of the first receive beam.

Additionally or alternatively, the communications manager 620 may support wireless communications at a first UE in accordance with examples as disclosed herein. The sidelink control component 640 may be configured as or otherwise support a means for transmitting, to a second UE, sidelink control information including an indication of resources reserved by the first UE and an indication of one or more transmit beam directions associated with the resources reserved by the first UE. The transmit beam component 635 may be configured as or otherwise support a means for transmitting, via the resources reserved by the first UE, a first message to the second UE using a first transmit beam, the first transmit beam having a first transmit beam direction based at least in part on the indication of the one or more transmit beam directions.

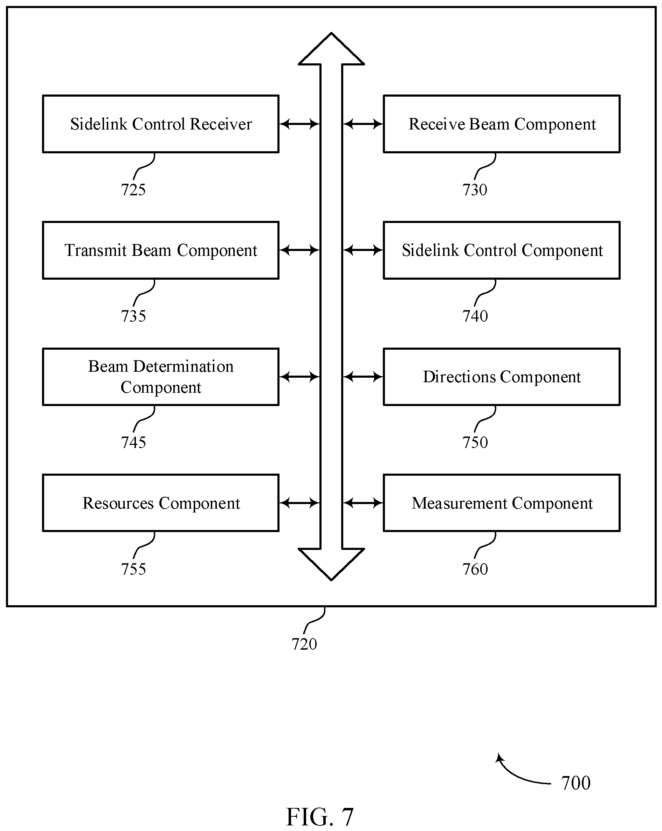

**FIG. 7** shows a block diagram 700 of a communications manager 720 that supports beam based measurement and resource management techniques for wireless communications systems in accordance with aspects of the present disclosure. The communications manager 720 may be an example of aspects of a communications manager 520, a communications manager 620, or both, as described herein. The communications manager 720, or various components thereof, may be an example of means for performing various aspects of beam based measurement and resource management techniques for wireless communications systems as described herein. For example, the communications manager 720 may include a sidelink control receiver 725, a receive beam component 730, a transmit beam component 735, a sidelink control component 740, a beam determination component 745, a directions component 750, a resources component 755, a measurement component 760, or any combination thereof. Each of these components may communicate, directly or indirectly, with one another (e.g., via one or more buses).

The communications manager 720 may support wireless communications at a first UE in accordance with examples as disclosed herein. The sidelink control receiver 725 may be configured as or otherwise support a means for receiving, from a second UE, sidelink control information for performing full-duplex communications with the second UE, the sidelink control information including an indication of resources reserved by the second UE and an indication of one or more transmit beam directions associated with the resources reserved by the second UE. The receive beam component 730 may be configured as or otherwise support a means for receiving, via the resources reserved by the second UE, a first message using a first receive beam based on the sidelink control information. The transmit beam component 735 may be configured as or otherwise support a means for transmitting, via the resources reserved by the second UE, a second message using a first transmit beam of the first UE, a direction of the first transmit beam being different from a direction of the first receive beam.

In some examples, the sidelink control receiver 725 may be configured as or otherwise support a means for receiving the sidelink control information via a first transmit beam direction associated with the second UE. In some examples, the beam determination component 745 may be configured as or otherwise support a means for determining the one or more transmit beam directions associated with the resources reserved by the second UE based on receiving the sidelink control information via the first transmit beam direction associated with the second UE.

In some examples, the one or more transmit beam directions include the first transmit beam direction. In some examples, the one or more transmit beam directions include a second transmit beam direction, the indication of the one or more transmit beam directions indicating the second transmit beam direction relative to the first transmit beam direction.

In some examples, the directions component 750 may be configured as or otherwise support a means for determining a set of directions for transmitting the second message based on the indication of the one or more transmit beam directions associated with the resources reserved by the second UE, each direction of the set of directions being different from the direction of the first receive beam or directions adjacent to the direction of the first receive beam.

In some examples, the resources component 755 may be configured as or otherwise support a means for determining a set of resources for transmitting a third message concurrent with receiving the first message using the first receive beam, the set of resources including resources different from the resources reserved by the second UE, resources different from a second set of resources adjacent to the resources reserved by the second UE, or a combination thereof. In some examples, the transmit beam component 735 may be configured as or otherwise support a means for transmitting, via resources of the set of resources, the third message using a second transmit beam of the first UE, the direction of the second transmit beam being the direction of the first receive beam, a direction adjacent to the direction of the first receive beam, or a combination thereof.

In some examples, the sidelink control component 740 may be configured as or otherwise support a means for receiving, from a third UE, second sidelink control information for performing full-duplex communications with the third UE, the second sidelink control information including an indication of second resources reserved by the third UE and an indication of one or more transmit beam directions associated with the resources reserved by the third UE. In some examples, the directions component 750 may be configured as or otherwise support a means for selecting, based on receiving the second sidelink control information and the sidelink control information, the direction of the first transmit beam from a set of directions, each direction of the set of directions being different from the direction of the first receive beam, a second receive beam associated with receiving a third message from the third UE, or a combination thereof.

In some examples, the resources component 755 may be configured as or otherwise support a means for selecting, based on receiving the second sidelink control information and the sidelink control information, resources for transmitting the second message from a set of resources different from the resources reserved by the second UE, the second resources reserved by the third UE, or a combination thereof.

In some examples, the measurement component 760 may be configured as or otherwise support a means for obtaining a set of interference measurements for a set of beam pairs, each interference measurement corresponding to a respective transmit beam and the first receive beam. In some examples, the measurement component 760 may be configured as or otherwise support a means for identifying a first interference measurement of the set of interference measurements associated with a value lower than other interference measurements of the set of interference measurements. In some examples, the transmit beam component 735 may be configured as or otherwise support a means for selecting the first transmit beam from a set of multiple transmit beams based on identifying the first interference measurement, the first interference measurement corresponding to a beam pair including the first transmit beam and the first receive beam.

In some examples, the sidelink control component 740 may be configured as or otherwise support a means for transmitting sidelink control information including an indication of second resources reserved by the first UE and an indication of one or more transmit beam directions associated with the resources reserved by the first UE.

Additionally or alternatively, the communications manager 720 may support wireless communications at a first UE in accordance with examples as disclosed herein. The sidelink control component 740 may be configured as or otherwise support a means for transmitting, to a second UE, sidelink control information including an indication of resources reserved by the first UE and an indication of one or more transmit beam directions associated with the resources reserved by the first UE. In some examples, the transmit beam component 735 may be configured as or otherwise support a means for transmitting, via the resources reserved by the first UE, a first message to the second UE using a first transmit beam, the first transmit beam having a first transmit beam direction based at least in part on the indication of the one or more transmit beam directions.

In some examples, the sidelink control component 740 may be configured as or otherwise support a means for receiving second sidelink control information using a first receive beam, the second sidelink control information including an indication of resources reserved by a third UE, an indication of a second transmit beam direction associated with the third UE, or a combination thereof. In some examples, the directions component 750 may be configured as or otherwise support a means for determining the one or more transmit beam directions associated with the resources reserved by the first UE based on receiving the second sidelink control information via the first receive beam.

In some examples, the directions component 750 may be configured as or otherwise support a means for selecting the one or more transmit beam directions from a set of transmit beam directions, each transmit beam direction of the set of transmit beam directions being different from a direction of the first receive beam or directions adjacent to the direction of the first receive beam.

In some examples, the measurement component 760 may be configured as or otherwise support a means for obtaining a set of interference measurements for a set of beam pairs, each interference measurement corresponding to a respective transmit beam and the first receive beam. In some examples, the measurement component 760 may be configured as or otherwise support a means for identifying a first interference measurement of the set of interference measurements associated with a value lower than other interference measurements of the set of interference measurements. In some examples, the transmit beam component 735 may be configured as or otherwise support a means for selecting the first transmit beam from a set of multiple transmit beams based on identifying the first interference measurement, the first interference measurement corresponding to a beam pair including the first transmit beam and the first receive beam.

In some examples, the one or more transmit beam directions include the first transmit beam direction. In some examples, the one or more transmit beam directions include a second transmit beam direction, the indication of the one or more transmit beam directions indicating the second transmit beam direction relative to the first transmit beam direction.

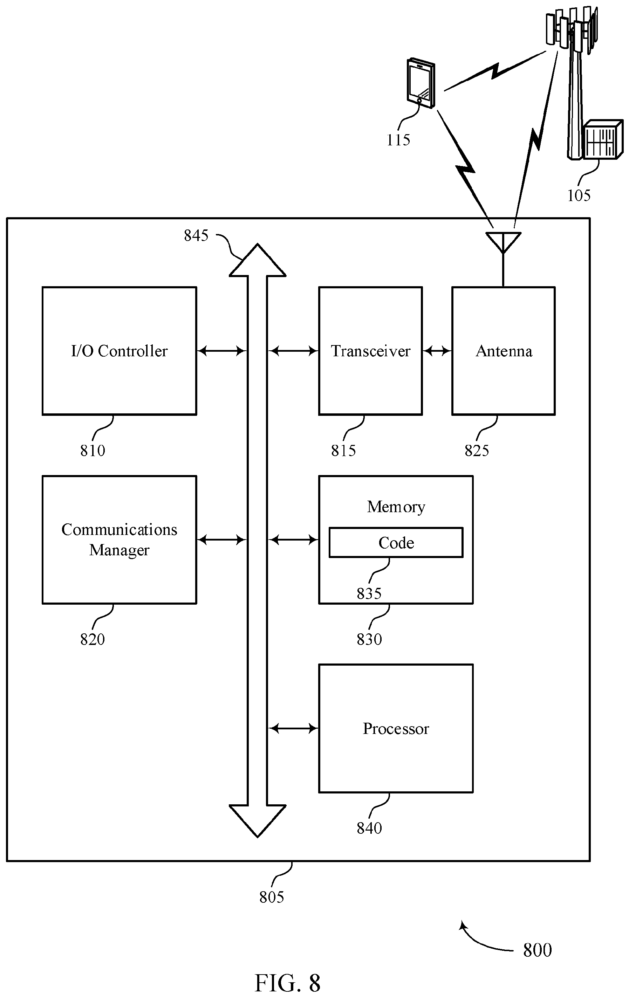

**FIG. 8** shows a diagram of a system 800 including a device 805 that supports beam based measurement and resource management techniques for wireless communications systems in accordance with aspects of the present disclosure. The device 805 may be an example of or include the components of a device 505, a device 605, or a UE 115 as described herein. The device 805 may communicate wirelessly with one or more base stations 105, UEs 115, or any combination thereof. The device 805 may include components for bi-directional voice and data communications including components for transmitting and receiving communications, such as a communications manager 820, an input/output (I/O) controller 810, a transceiver 815, an antenna 825, a memory 830, code 835, and a processor 840. These components may be in electronic communication or otherwise coupled (e.g., operatively, communicatively, functionally, electronically, electrically) via one or more buses (e.g., a bus 845).

The I/O controller 810 may manage input and output signals for the device 805. The I/O controller 810 may also manage peripherals not integrated into the device 805. In some cases, the I/O controller 810 may represent a physical connection or port to an external peripheral. In some cases, the I/O controller 810 may utilize an operating system such as iOS^{®}, ANDROID^{®}, MS-DOS^{®}, MS-WINDOWS^{®}, OS/2^{®}, UNIX^{®}, LINUX^{®}, or another known operating system. Additionally or alternatively, the I/O controller 810 may represent or interact with a modem, a keyboard, a mouse, a touchscreen, or a similar device. In some cases, the I/O controller 810 may be implemented as part of a processor, such as the processor 840. In some cases, a user may interact with the device 805 via the I/O controller 810 or via hardware components controlled by the I/O controller 810.

In some cases, the device 805 may include a single antenna 825. However, in some other cases, the device 805 may have more than one antenna 825, which may have the capability of concurrently transmitting or receiving multiple wireless transmissions. The transceiver 815 may communicate bi-directionally, via the one or more antennas 825, wired, or wireless links as described herein. For example, the transceiver 815 may represent a wireless transceiver and may communicate bi-directionally with another wireless transceiver. The transceiver 815 may also include a modem to modulate the packets, to provide the modulated packets to one or more antennas 825 for transmission, and to demodulate packets received from the one or more antennas 825. The transceiver 815, or the transceiver 815 and one or more antennas 825, may be an example of a transmitter 515, a transmitter 615, a receiver 510, a receiver 610, or any combination thereof or component thereof, as described herein.

The memory 830 may include random access memory (RAM) and read-only memory (ROM). The memory 830 may store computer-readable, computer-executable code 835 including instructions that, when executed by the processor 840, cause the device 805 to perform various functions described herein. The code 835 may be stored in a non-transitory computer-readable medium such as system memory or another type of memory. In some cases, the code 835 may not be directly executable by the processor 840 but may cause a computer (e.g., when compiled and executed) to perform functions described herein. In some cases, the memory 830 may contain, among other things, a basic I/O system (BIOS) which may control basic hardware or software operation such as the interaction with peripheral components or devices.

The processor 840 may include an intelligent hardware device (e.g., a general-purpose processor, a DSP, a CPU, a microcontroller, an ASIC, an FPGA, a programmable logic device, a discrete gate or transistor logic component, a discrete hardware component, or any combination thereof). In some cases, the processor 840 may be configured to operate a memory array using a memory controller. In some other cases, a memory controller may be integrated into the processor 840. The processor 840 may be configured to execute computer-readable instructions stored in a memory (e.g., the memory 830) to cause the device 805 to perform various functions (e.g., functions or tasks supporting beam based measurement and resource management techniques for wireless communications systems). For example, the device 805 or a component of the device 805 may include a processor 840 and memory 830 coupled to the processor 840, the processor 840 and memory 830 configured to perform various functions described herein.

The communications manager 820 may support wireless communications at a first UE in accordance with examples as disclosed herein. For example, the communications manager 820 may be configured as or otherwise support a means for receiving, from a second UE, sidelink control information for performing full-duplex communications with the second UE, the sidelink control information including an indication of resources reserved by the second UE and an indication of one or more transmit beam directions associated with the resources reserved by the second UE. The communications manager 820 may be configured as or otherwise support a means for receiving, via the resources reserved by the second UE, a first message using a first receive beam based on the sidelink control information. The communications manager 820 may be configured as or otherwise support a means for transmitting, via the resources reserved by the second UE, a second message using a first transmit beam of the first UE, a direction of the first transmit beam being different from a direction of the first receive beam.

Additionally or alternatively, the communications manager 820 may support wireless communications at a first UE in accordance with examples as disclosed herein. For example, the communications manager 820 may be configured as or otherwise support a means for transmitting, to a second UE, sidelink control information including an indication of resources reserved by the first UE and an indication of one or more transmit beam directions associated with the resources reserved by the first UE. The communications manager 820 may be configured as or otherwise support a means for transmitting, via the resources reserved by the first UE, a first message to the second UE using a first transmit beam, the first transmit beam having a first transmit beam direction based at least in part on the indication of the one or more transmit beam directions.

By including or configuring the communications manager 820 in accordance with examples as described herein, the device 805 may support techniques for beam based measurement and resource management techniques as described herein. For example, the device 805 may support SCI that indicates one or more transmit beam directions in addition or alternative to an indication of resource resources. Such techniques may enable the device 805 to utilize reserved resources for FD operations while maintaining a relatively low interference, which may result in efficient resource utilization and communications.

In some examples, the communications manager 820 may be configured to perform various operations (e.g., receiving, monitoring, transmitting) using or otherwise in cooperation with the transceiver 815, the one or more antennas 825, or any combination thereof. Although the communications manager 820 is illustrated as a separate component, in some examples, one or more functions described with reference to the communications manager 820 may be supported by or performed by the processor 840, the memory 830, the code 835, or any combination thereof. For example, the code 835 may include instructions executable by the processor 840 to cause the device 805 to perform various aspects of beam based measurement and resource management techniques for wireless communications systems as described herein, or the processor 840 and the memory 830 may be otherwise configured to perform or support such operations.

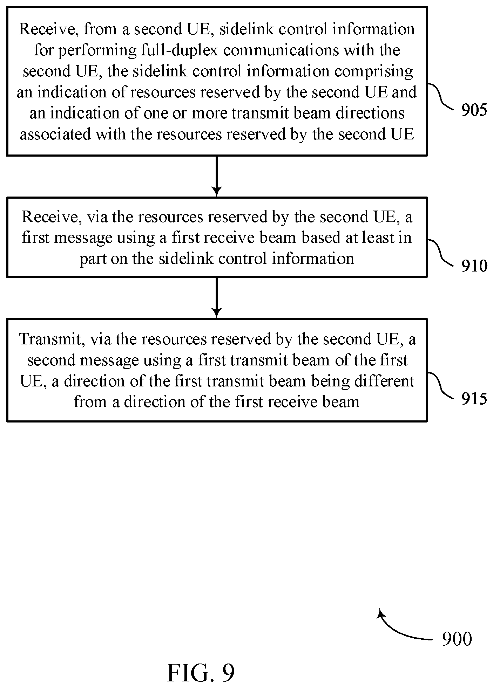

**FIG. 9** shows a flowchart illustrating a method 900 that supports beam based measurement and resource management techniques for wireless communications systems in accordance with aspects of the present disclosure. The operations of the method 900 may be implemented by a UE or its components as described herein. For example, the operations of the method 900 may be performed by a UE 115 as described with reference to FIGs. 1 through 8. In some examples, a UE may execute a set of instructions to control the functional elements of the UE to perform the described functions. Additionally or alternatively, the UE may perform aspects of the described functions using special-purpose hardware.

At 905, the method may include receiving, from a second UE, sidelink control information for performing full-duplex communications with the second UE, the sidelink control information including an indication of resources reserved by the second UE and an indication of one or more transmit beam directions associated with the resources reserved by the second UE. The operations of 905 may be performed in accordance with examples as disclosed herein. In some examples, aspects of the operations of 905 may be performed by a sidelink control receiver 725 as described with reference to FIG. 7.

At 910, the method may include receiving, via the resources reserved by the second UE, a first message using a first receive beam based on the sidelink control information. The operations of 910 may be performed in accordance with examples as disclosed herein. In some examples, aspects of the operations of 910 may be performed by a receive beam component 730 as described with reference to FIG. 7.

At 915, the method may include transmitting, via the resources reserved by the second UE, a second message using a first transmit beam of the first UE, a direction of the first transmit beam being different from a direction of the first receive beam. The operations of 915 may be performed in accordance with examples as disclosed herein. In some examples, aspects of the operations of 915 may be performed by a transmit beam component 735 as described with reference to FIG. 7.

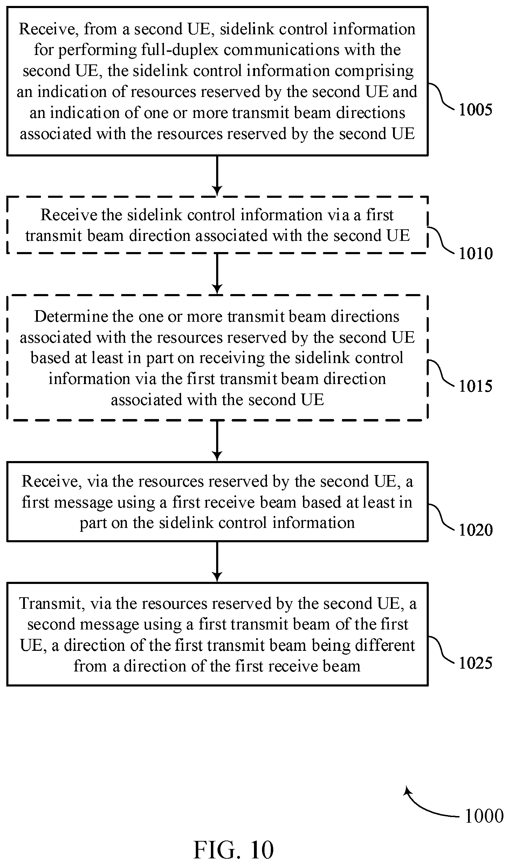

**FIG. 10** shows a flowchart illustrating a method 1000 that supports beam based measurement and resource management techniques for wireless communications systems in accordance with aspects of the present disclosure. The operations of the method 1000 may be implemented by a UE or its components as described herein. For example, the operations of the method 1000 may be performed by a UE 115 as described with reference to FIGs. 1 through 8. In some examples, a UE may execute a set of instructions to control the functional elements of the UE to perform the described functions. Additionally or alternatively, the UE may perform aspects of the described functions using special-purpose hardware.

At 1005, the method may include receiving, from a second UE, sidelink control information for performing full-duplex communications with the second UE, the sidelink control information including an indication of resources reserved by the second UE and an indication of one or more transmit beam directions associated with the resources reserved by the second UE. The operations of 1005 may be performed in accordance with examples as disclosed herein. In some examples, aspects of the operations of 1005 may be performed by a sidelink control receiver 725 as described with reference to FIG. 7.

In some examples, at 1010 the method may include receiving the sidelink control information via a first transmit beam direction associated with the second UE. The operations of 1010 may be performed in accordance with examples as disclosed herein. In some examples, aspects of the operations of 1010 may be performed by a sidelink control receiver 725 as described with reference to FIG. 7.

In some examples, at 1015 the method may include determining the one or more transmit beam directions associated with the resources reserved by the second UE based on receiving the sidelink control information via the first transmit beam direction associated with the second UE. The operations of 1015 may be performed in accordance with examples as disclosed herein. In some examples, aspects of the operations of 1015 may be performed by a beam determination component 745 as described with reference to FIG. 7.

At 1020, the method may include receiving, via the resources reserved by the second UE, a first message using a first receive beam based on the sidelink control information. The operations of 1020 may be performed in accordance with examples as disclosed herein. In some examples, aspects of the operations of 1020 may be performed by a receive beam component 730 as described with reference to FIG. 7.

At 1025, the method may include transmitting, via the resources reserved by the second UE, a second message using a first transmit beam of the first UE, a direction of the first transmit beam being different from a direction of the first receive beam. The operations of 1025 may be performed in accordance with examples as disclosed herein. In some examples, aspects of the operations of 1025 may be performed by a transmit beam component 735 as described with reference to FIG. 7.

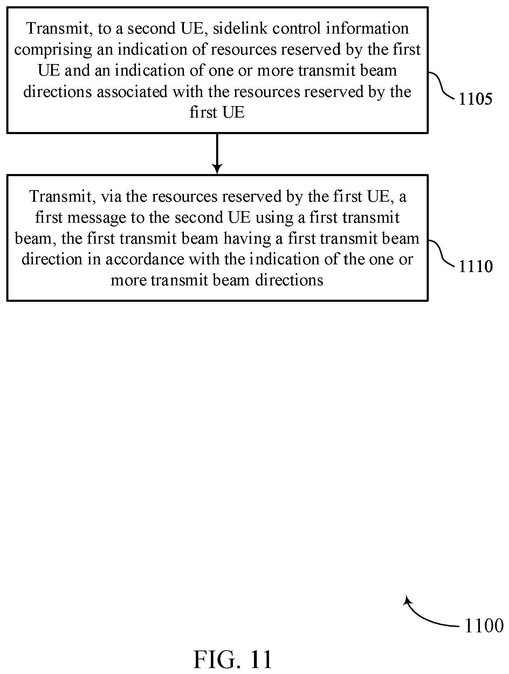

**FIG. 11** shows a flowchart illustrating a method 1100 that supports beam based measurement and resource management techniques for wireless communications systems in accordance with aspects of the present disclosure. The operations of the method 1100 may be implemented by a UE or its components as described herein. For example, the operations of the method 1100 may be performed by a UE 115 as described with reference to FIGs. 1 through 8. In some examples, a UE may execute a set of instructions to control the functional elements of the UE to perform the described functions. Additionally or alternatively, the UE may perform aspects of the described functions using special-purpose hardware.

At 1105, the method may include transmitting, to a second UE, sidelink control information including an indication of resources reserved by the first UE and an indication of one or more transmit beam directions associated with the resources reserved by the first UE. The operations of 1105 may be performed in accordance with examples as disclosed herein. In some examples, aspects of the operations of 1105 may be performed by a sidelink control component 740 as described with reference to FIG. 7.

At 1110, the method may include transmitting, via the resources reserved by the first UE, a first message to the second UE using a first transmit beam, the first transmit beam having a first transmit beam direction based at least in part on the indication of the one or more transmit beam directions. The operations of 1110 may be performed in accordance with examples as disclosed herein. In some examples, aspects of the operations of 1110 may be performed by a transmit beam component 735 as described with reference to FIG. 7.

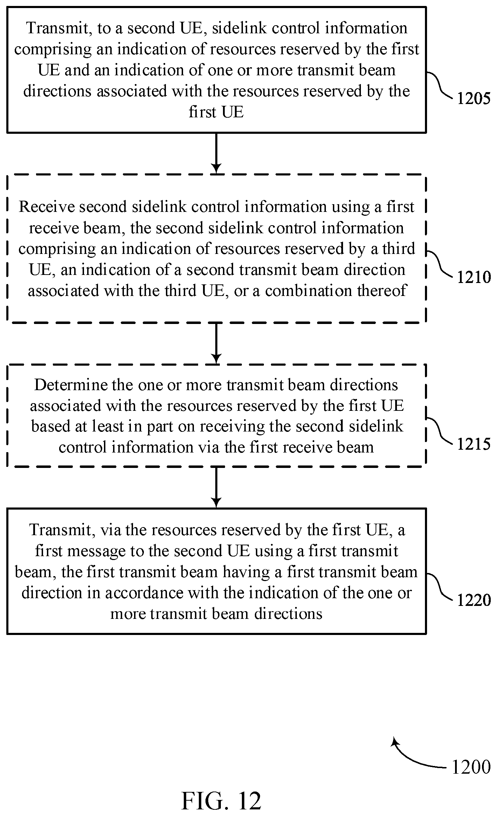

**FIG. 12** shows a flowchart illustrating a method 1200 that supports beam based measurement and resource management techniques for wireless communications systems in accordance with aspects of the present disclosure. The operations of the method 1200 may be implemented by a UE or its components as described herein. For example, the operations of the method 1200 may be performed by a UE 115 as described with reference to FIGs. 1 through 8. In some examples, a UE may execute a set of instructions to control the functional elements of the UE to perform the described functions. Additionally or alternatively, the UE may perform aspects of the described functions using special-purpose hardware.

At 1205, the method may include transmitting, to a second UE, sidelink control information including an indication of resources reserved by the first UE and an indication of one or more transmit beam directions associated with the resources reserved by the first UE. The operations of 1205 may be performed in accordance with examples as disclosed herein. In some examples, aspects of the operations of 1205 may be performed by a sidelink control component 740 as described with reference to FIG. 7.

In some examples, at 1210 the method may include receiving second sidelink control information using a first receive beam, the second sidelink control information including an indication of resources reserved by a third UE, an indication of a second transmit beam direction associated with the third UE, or a combination thereof. The operations of 1210 may be performed in accordance with examples as disclosed herein. In some examples, aspects of the operations of 1210 may be performed by a sidelink control component 740 as described with reference to FIG. 7.

In some examples, at 1215 the method may include determining the one or more transmit beam directions associated with the resources reserved by the first UE based on receiving the second sidelink control information via the first receive beam. The operations of 1215 may be performed in accordance with examples as disclosed herein. In some examples, aspects of the operations of 1215 may be performed by a directions component 750 as described with reference to FIG. 7.

At 1220, the method may include transmitting, via the resources reserved by the first UE, a first message to the second UE using a first transmit beam, the first transmit beam having a first transmit beam direction based at least in part on the indication of the one or more transmit beam directions. The operations of 1220 may be performed in accordance with examples as disclosed herein. In some examples, aspects of the operations of 1220 may be performed by a transmit beam component 735 as described with reference to FIG. 7.

It should be noted that the methods described herein describe possible implementations, and that the operations and the steps may be rearranged or otherwise modified and that other implementations are possible. Further, aspects from two or more of the methods may be combined.

Although aspects of an LTE, LTE-A, LTE-A Pro, or NR system may be described for purposes of example, and LTE, LTE-A, LTE-A Pro, or NR terminology may be used in much of the description, the techniques described herein are applicable beyond LTE, LTE-A, LTE-A Pro, or NR networks. For example, the described techniques may be applicable to various other wireless communications systems such as Ultra Mobile Broadband (UMB), Institute of Electrical and Electronics Engineers (IEEE) 802.11 (Wi-Fi), IEEE 802.16 (WiMAX), IEEE 802.20, Flash-OFDM, as well as other systems and radio technologies not explicitly mentioned herein.

Information and signals described herein may be represented using any of a variety of different technologies and techniques. For example, data, instructions, commands, information, signals, bits, symbols, and chips that may be referenced throughout the description may be represented by voltages, currents, electromagnetic waves, magnetic fields or particles, optical fields or particles, or any combination thereof.

The various illustrative blocks and components described in connection with the disclosure herein may be implemented or performed with a general-purpose processor, a DSP, an ASIC, a CPU, an FPGA or other programmable logic device, discrete gate or transistor logic, discrete hardware components, or any combination thereof designed to perform the functions described herein. A general-purpose processor may be a microprocessor, but in the alternative, the processor may be any processor, controller, microcontroller, or state machine. A processor may also be implemented as a combination of computing devices (e.g., a combination of a DSP and a microprocessor, multiple microprocessors, one or more microprocessors in conjunction with a DSP core, or any other such configuration).

The functions described herein may be implemented in hardware, software executed by a processor, firmware, or any combination thereof. If implemented in software executed by a processor, the functions may be stored on or transmitted over as one or more instructions or code on a computer-readable medium. Other examples and implementations are within the scope of the disclosure and appended claims. For example, due to the nature of software, functions described herein may be implemented using software executed by a processor, hardware, firmware, hardwiring, or combinations of any of these. Features implementing functions may also be physically located at various positions, including being distributed such that portions of functions are implemented at different physical locations.

Computer-readable media includes both non-transitory computer storage media and communication media including any medium that facilitates transfer of a computer program from one place to another. A non-transitory storage medium may be any available medium that may be accessed by a general-purpose or special-purpose computer. By way of example, and not limitation, non-transitory computer-readable media may include RAM, ROM, electrically erasable programmable ROM (EEPROM), flash memory, compact disk (CD) ROM or other optical disk storage, magnetic disk storage or other magnetic storage devices, or any other non-transitory medium that may be used to carry or store desired program code means in the form of instructions or data structures and that may be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of computer-readable medium. Disk and disc, as used herein, include CD, laser disc, optical disc, digital versatile disc (DVD), floppy disk and Blu-ray disc where disks usually reproduce data magnetically, while discs reproduce data optically with lasers. Combinations of the above are also included within the scope of computer-readable media.

As used herein, including in the claims, "or" as used in a list of items (e.g., a list of items prefaced by a phrase such as "at least one of" or "one or more of") indicates an inclusive list such that, for example, a list of at least one of A, B, or C means A or B or C or AB or AC or BC or ABC (i.e., A and B and C). Also, as used herein, the phrase "based on" shall not be construed as a reference to a closed set of conditions. For example, an example step that is described as "based on condition A" may be based on both a condition A and a condition B without departing from the scope of the present disclosure. In other words, as used herein, the phrase "based on" shall be construed in the same manner as the phrase "based at least in part on."

In the appended figures, similar components or features may have the same reference label. Further, various components of the same type may be distinguished by following the reference label by a dash and a second label that distinguishes among the similar components. If just the first reference label is used in the specification, the description is applicable to any one of the similar components having the same first reference label irrespective of the second reference label, or other subsequent reference label.

The description set forth herein, in connection with the appended drawings, describes example configurations and does not represent all the examples that may be implemented or that are within the scope of the claims. The term "example" used herein means "serving as an example, instance, or illustration," and not "preferred" or "advantageous over other examples." The detailed description includes specific details for the purpose of providing an understanding of the described techniques. These techniques, however, may be practiced without these specific details. In some instances, known structures and devices are shown in block diagram form in order to avoid obscuring the concepts of the described examples.

The description herein is provided to enable a person having ordinary skill in the art to make or use the disclosure. Various modifications to the disclosure will be apparent to a person having ordinary skill in the art, and the generic principles defined herein may be applied to other variations without departing from the scope of the disclosure. Thus, the disclosure is not limited to the examples and designs described herein but is to be accorded the broadest scope consistent with the claims.

## Claims

1. A method for wireless communications at a first user equipment (115), UE, comprising:
receiving (905), from a second UE, sidelink control information for performing full-duplex communications with the second UE, the sidelink control information comprising an indication of resources reserved by the second UE and an indication of one or more transmit beam directions associated with the resources reserved by the second UE for transmissions by the second UE;
receiving (910), via the resources reserved by the second UE, a first message using a first receive beam based at least in part on the sidelink control information; and
transmitting (91₅), via the resources reserved by the second UE for transmissions by the second UE, a second message using a first transmit beam of the first UE (115), a direction of the first transmit beam being different from a direction of the first receive beam.

2. The method of claim 1, further comprising:
receiving the sidelink control information via a first transmit beam direction associated with the second UE; and
determining the one or more transmit beam directions associated with the resources reserved by the second UE based at least in part on receiving the sidelink control information via the first transmit beam direction associated with the second UE.

3. The method of claim 2, wherein the one or more transmit beam directions comprise the first transmit beam direction.

4. The method of claim 2, wherein the one or more transmit beam directions comprise a second transmit beam direction, the indication of the one or more transmit beam directions indicating the second transmit beam direction relative to the first transmit beam direction.

5. The method of claim 1, further comprising:
determining a set of directions for transmitting the second message based at least in part on the indication of the one or more transmit beam directions associated with the resources reserved by the second UE, each direction of the set of directions being different from the direction of the first receive beam or directions adjacent to the direction of the first receive beam.

6. The method of claim 1, further comprising:
determining a set of resources for transmitting a third message concurrent with receiving the first message using the first receive beam, the set of resources comprising resources different from the resources reserved by the second UE, resources different from a second set of resources adjacent to the resources reserved by the second UE, or a combination thereof; and
transmitting, via resources of the set of resources, the third message using a second transmit beam of the first UE (115), the direction of the second transmit beam being the direction of the first receive beam, a direction adjacent to the direction of the first receive beam, or a combination thereof.

7. The method of claim 1, further comprising:
receiving, from a third UE, second sidelink control information for performing full-duplex communications with the third UE, the second sidelink control information comprising an indication of second resources reserved by the third UE and an indication of one or more transmit beam directions associated with the resources reserved by the third UE; and
selecting, based at least in part on receiving the second sidelink control information and the sidelink control information, the direction of the first transmit beam from a set of directions, each direction of the set of directions being different from the direction of the first receive beam, a second receive beam associated with receiving a third message from the third UE, or a combination thereof;
the method in particular further comprising:
selecting, based at least in part on receiving the second sidelink control information and the sidelink control information, resources for transmitting the second message from a set of resources different from the resources reserved by the second UE, the second resources reserved by the third UE, or a combination thereof.

8. The method of claim 1, further comprising:
obtaining a set of interference measurements for a set of beam pairs, each interference measurement corresponding to a respective transmit beam and the first receive beam;
identifying a first interference measurement of the set of interference measurements associated with a value lower than other interference measurements of the set of interference measurements; and
selecting the first transmit beam from a plurality of transmit beams based at least in part on identifying the first interference measurement, the first interference measurement corresponding to a beam pair comprising the first transmit beam and the first receive beam.

9. The method of claim 1, further comprising:
transmitting sidelink control information comprising an indication of second resources reserved by the first UE (115) and an indication of one or more transmit beam directions associated with the resources reserved by the first UE (115).

10. A method for wireless communications at a first user equipment (115), UE, comprising:
transmitting (1105), to a second UE, sidelink control information for performing full-duplex communications with the second UE, the sidelink control information comprising an indication of resources reserved by the first UE (115) and an indication of one or more transmit beam directions associated with the resources reserved by the first UE (115);
transmitting (1110), via the resources reserved by the first UE (115), a first message to the second UE using a first transmit beam, the first transmit beam having a first transmit beam direction based at least in part on the indication of the one or more transmit beam directions; and
receiving (91₅), via the resources reserved by the first UE (115) for transmissions by the first UE (115), a second message using a first receive beam of the first UE (115), a direction of the first receive beam being different from a direction of the first transmit beam.

11. The method of claim 10, further comprising:
receiving second sidelink control information using a first receive beam, the second sidelink control information comprising an indication of resources reserved by a third UE, an indication of a second transmit beam direction associated with the third UE, or a combination thereof; and
determining the one or more transmit beam directions associated with the resources reserved by the first UE (115) based at least in part on receiving the second sidelink control information via the first receive beam;
the method in particular further comprising:
selecting the one or more transmit beam directions from a set of transmit beam directions, each transmit beam direction of the set of transmit beam directions being different from a direction of the first receive beam or directions adjacent to the direction of the first receive beam; or
the method in particular further comprising:
obtaining a set of interference measurements for a set of beam pairs, each interference measurement corresponding to a respective transmit beam and the first receive beam;
identifying a first interference measurement of the set of interference measurements associated with a value lower than other interference measurements of the set of interference measurements; and
selecting the first transmit beam from a plurality of transmit beams based at least in part on identifying the first interference measurement, the first interference measurement corresponding to a beam pair comprising the first transmit beam and the first receive beam.

12. The method of claim 10, wherein the one or more transmit beam directions comprise the first transmit beam direction.

13. The method of claim 10, wherein the one or more transmit beam directions comprise a second transmit beam direction, the indication of the one or more transmit beam directions indicating the second transmit beam direction relative to the first transmit beam direction.

14. One of an apparatus for wireless communications at a first user equipment (115), UE, comprising means for performing the method of any one of the claims 1 to 9 or an apparatus for wireless communications at a first UE (115), comprising means for performing the method of any one of the claims 10 to 13.

15. One of a computer program comprising instructions that, when executed on one or more processors of an apparatus for wireless communications at a first user equipment (115), UE, causes the first UE (115) to perform the method of any one of the claims 1 to 9 or a computer program comprising instructions that, when executed on one or more processors of an apparatus for wireless communications at a first UE (115), causes the first UE (115) to perform the method of any one of the claims 10 to 13.

## Patentansprüche

1. Verfahren für Drahtloskommunikationen an einem ersten Benutzergerät (115), UE, das Folgendes umfasst:
Empfangen (905), von einem zweiten UE, von Sidelink-Steuerinformation zum Durchführen von Vollduplexkommunikationen mit dem zweiten UE, wobei die Sidelink-Steuerinformation eine Angabe von Ressourcen, die durch das zweite UE reserviert sind, und eine Angabe von einer oder mehreren Sendestrahlrichtungen, die mit den Ressourcen verknüpft sind, die durch das zweite UE für Übertragungen durch das zweite UE reserviert sind, umfasst;
Empfangen (910), über die Ressourcen, die durch das zweite UE reserviert sind, einer ersten Nachricht unter Verwendung eines ersten Empfangsstrahls basierend wenigstens teilweise auf der Sidelink-Steuerinformation; und
Übertragen (915), über die Ressourcen, die durch das zweite UE für Übertragungen durch das zweite UE reserviert sind, einer zweiten Nachricht unter Verwendung eines ersten Sendestrahls des ersten UE (115), wobei sich eine Richtung des ersten Sendestrahls von einer Richtung des ersten Empfangsstrahls unterscheidet.

2. Verfahren nach Anspruch 1, das ferner Folgendes umfasst:
Empfangen der Sidelink-Steuerinformation über eine erste Sendestrahlrichtung, die mit dem zweiten UE verknüpft ist; und
Bestimmen der einen oder mehreren Sendestrahlrichtungen, die mit den Ressourcen verknüpft sind, die durch das zweite UE reserviert sind, basierend wenigstens teilweise auf dem Empfangen der Sidelink-Steuerinformation über die erste Sendestrahlrichtung, die mit dem zweiten UE verknüpft ist.

3. Verfahren nach Anspruch 2, wobei die eine oder mehreren Sendestrahlrichtungen die erste Sendestrahlrichtung umfassen.

4. Verfahren nach Anspruch 2, wobei die eine oder mehreren Sendestrahlrichtungen eine zweite Sendestrahlrichtung umfassen, wobei die Angabe der einen oder mehreren Sendestrahlrichtungen die zweite Sendestrahlrichtung relativ zu der ersten Sendestrahlrichtung angibt.

5. Verfahren nach Anspruch 1, das ferner Folgendes umfasst:
Bestimmen eines Satzes von Richtungen zum Übertragen der zweiten Nachricht basierend wenigstens teilweise auf der Angabe der einen oder mehreren Sendestrahlrichtungen, die mit den Ressourcen verknüpft sind, die durch das zweite UE reserviert sind, wobei sich jede Richtung des Satzes von Richtungen von der Richtung des ersten Empfangsstrahls oder von Richtungen benachbart zu der Richtung des ersten Empfangsstrahls unterscheidet.

6. Verfahren nach Anspruch 1, das ferner Folgendes umfasst:
Bestimmen eines Satzes von Ressourcen zum Übertragen einer dritten Nachricht gleichzeitig mit dem Empfangen der ersten Nachricht unter Verwendung des ersten Empfangsstrahls, wobei der Satz von Ressourcen Ressourcen, die sich von den Ressourcen unterscheiden, die durch das zweite UE reserviert sind, Ressourcen, die sich von einem zweiten Satz von Ressourcen benachbart zu den Ressourcen unterscheiden, die durch das zweite UE reserviert sind, oder eine Kombination davon umfasst; und
Übertragen, über Ressourcen des Satzes von Ressourcen, der dritten Nachricht unter Verwendung eines zweiten Sendestrahls des ersten UE (115), wobei die Richtung des zweiten Sendestrahls die Richtung des ersten Empfangsstrahls, eine Richtung benachbart zu der Richtung des ersten Empfangsstrahls oder eine Kombination davon ist.

7. Verfahren nach Anspruch 1, das ferner Folgendes umfasst:
Empfangen, von einem dritten UE, von zweiter Sidelink-Steuerinformation zum Durchführen von Vollduplexkommunikationen mit dem dritten UE, wobei die zweite Sidelink-Steuerinformation eine Angabe von zweiten Ressourcen, die durch das dritte UE reserviert sind, und eine Angabe von einer oder mehreren Sendestrahlrichtungen, die mit den Ressourcen verknüpft sind, die durch das dritte UE reserviert sind, umfasst; und
Auswählen, basierend wenigstens teilweise auf dem Empfangen der zweiten Sidelink-Steuerinformation und der Sidelink-Steuerinformation, der Richtung des ersten Sendestrahls aus einem Satz von Richtungen, wobei sich jede Richtung des Satzes von Richtungen von der Richtung des ersten Empfangsstrahls, eines zweiten Empfangsstrahls, der mit dem Empfangen einer dritten Nachricht von dem dritten UE verknüpft ist, oder einer Kombination davon unterscheidet;
wobei das Verfahren insbesondere ferner Folgendes umfasst:
Auswählen, basierend wenigstens teilweise auf dem Empfangen der zweiten Sidelink-Steuerinformation und der Sidelink-Steuerinformation, von Ressourcen zum Übertragen der zweiten Nachricht aus einem Satz von Ressourcen, der sich von den Ressourcen unterscheidet, die durch das zweite UE reserviert sind, den zweiten Ressourcen, die durch das dritte UE reserviert sind, oder einer Kombination davon.

8. Verfahren nach Anspruch 1, das ferner Folgendes umfasst:
Erhalten eines Satzes von Interferenzmessungen für einen Satz von Strahlpaaren,
wobei jede Interferenzmessung einem jeweiligen Sendestrahl und dem ersten Empfangsstrahl entspricht;
Identifizieren einer ersten Interferenzmessung des Satzes von Interferenzmessungen, die mit einem Wert assoziiert ist, der niedriger als andere Interferenzmessungen des Satzes von Interferenzmessungen ist; und
Auswählen des ersten Sendestrahls aus einer Vielzahl von Sendestrahlen basierend wenigstens teilweise auf dem Identifizieren der ersten Interferenzmessung, wobei die erste Interferenzmessung einem Strahlpaar entspricht, das den ersten Sendestrahl und den ersten Empfangsstrahl umfasst.

9. Verfahren nach Anspruch 1, das ferner Folgendes umfasst:
Übertragen von Sidelink-Steuerinformation, die eine Angabe von zweiten Ressourcen, die durch das erste UE (115) reserviert sind, und eine Angabe von einer oder mehreren Sendestrahlrichtungen, die mit den Ressourcen verknüpft sind, die durch das erste UE (115) reserviert sind, umfasst.

10. Verfahren für Drahtloskommunikationen an einem ersten Benutzergerät (115), UE, das Folgendes umfasst:
Übertragen (1105), an ein zweites UE, von Sidelink-Steuerinformation zum Durchführen von Vollduplexkommunikationen mit dem zweiten UE, wobei die Sidelink-Steuerinformation eine Angabe von Ressourcen, die durch das erste UE (115) reserviert sind, und eine Angabe von einer oder mehreren Sendestrahlrichtungen, die mit den Ressourcen verknüpft sind, die durch das erste UE (115) reserviert sind, umfasst;
Übertragen (1110), über die Ressourcen, die durch das erste UE (115) reserviert sind, einer ersten Nachricht an das zweite UE unter Verwendung eines ersten Sendestrahls, wobei der erste Sendestrahl eine erste Sendestrahlrichtung basierend wenigstens teilweise auf der Angabe der einen oder mehreren Sendestrahlrichtungen aufweist; und
Empfangen (915), über die Ressourcen, die durch das erste UE (115) für Übertragungen durch das erste UE (115) reserviert sind, einer zweiten Nachricht unter Verwendung eines ersten Empfangsstrahls des ersten UE (115), wobei sich eine Richtung des ersten Empfangsstrahls von einer Richtung des ersten Sendestrahls unterscheidet.

11. Verfahren nach Anspruch 10, das ferner Folgendes umfasst:
Empfangen von zweiter Sidelink-Steuerinformation unter Verwendung eines ersten Empfangsstrahls, wobei die zweite Sidelink-Steuerinformation eine Angabe von Ressourcen, die durch ein drittes UE reserviert sind, eine Angabe einer zweiten Sendestrahlrichtung, die mit dem dritten UE verknüpft ist, oder eine Kombination davon umfasst; und
Bestimmen der einen oder mehreren Sendestrahlrichtungen, die mit den Ressourcen verknüpft sind, die durch das erste UE (115) reserviert sind, basierend wenigstens teilweise auf dem Empfangen der zweiten Sidelink-Steuerinformation über den ersten Empfangsstrahl;
wobei das Verfahren insbesondere ferner Folgendes umfasst:
Auswählen der einen oder mehreren Sendestrahlrichtungen aus einem Satz von Sendestrahlrichtungen, wobei sich jede Sendestrahlrichtung des Satzes von Sendestrahlrichtungen von einer Richtung des ersten Empfangsstrahls oder von Richtungen benachbart zu der Richtung des ersten Empfangsstrahls unterscheidet; oder
wobei das Verfahren insbesondere ferner Folgendes umfasst:
Erhalten eines Satzes von Interferenzmessungen für einen Satz von Strahlpaaren,
wobei jede Interferenzmessung einem jeweiligen Sendestrahl und dem ersten Empfangsstrahl entspricht;
Identifizieren einer ersten Interferenzmessung des Satzes von Interferenzmessungen, die mit einem Wert assoziiert ist, der niedriger als andere Interferenzmessungen des Satzes von Interferenzmessungen ist; und
Auswählen des ersten Sendestrahls aus einer Vielzahl von Sendestrahlen basierend wenigstens teilweise auf dem Identifizieren der ersten Interferenzmessung, wobei die erste Interferenzmessung einem Strahlpaar entspricht, das den ersten Sendestrahl und den ersten Empfangsstrahl umfasst.

12. Verfahren nach Anspruch 10, wobei die eine oder mehreren Sendestrahlrichtungen die erste Sendestrahlrichtung umfassen.

13. Verfahren nach Anspruch 10, wobei die eine oder mehreren Sendestrahlrichtungen eine zweite Sendestrahlrichtung umfassen, wobei die Angabe der einen oder mehreren Sendestrahlrichtungen die zweite Sendestrahlrichtung relativ zu der ersten Sendestrahlrichtung angibt.

14. Vorrichtung für Drahtloskommunikationen an einem ersten Benutzergerät (115), UE, die Mittel zum Durchführen des Verfahrens nach einem der Ansprüche 1 bis 9 umfasst, oder Vorrichtung für Drahtloskommunikationen an einem ersten UE (115), die Mittel zum Durchführen des Verfahrens nach einem der Ansprüche 10 bis 13 umfasst.

15. Computerprogramm, das Anweisungen umfasst, die, wenn sie auf einem oder mehreren Prozessoren einer Vorrichtung für Drahtloskommunikationen an einem ersten Benutzergerät (115), UE, ausgeführt werden, das erste UE (115) veranlassen, das Verfahren nach einem der Ansprüche 1 bis 9 durchzuführen, oder Computerprogramm, das Anweisungen umfasst, die, wenn sie auf einem oder mehreren Prozessoren einer Vorrichtung für Drahtloskommunikationen an einem ersten UE (115) ausgeführt werden, das erste UE (115) veranlassen, das Verfahren nach einem der Ansprüche 10 bis 13 durchzuführen.

## Revendications

1. Un procédé de communication sans fil au niveau d'un premier équipement utilisateur, UE (115), comprenant :
la réception (905), à partir d'un deuxième UE, d'une information de contrôle sidelink pour réaliser des communications en duplex intégral avec le deuxième UE, l'information de contrôle sidelink comprenant une indication de ressources réservées par le deuxième UE et une indication d'une ou plusieurs directions de faisceau d'émission associées aux ressources réservées par le deuxième UE pour des transmissions par le deuxième UE ;
la réception (910), via les ressources réservées par le deuxième UE, d'un premier message en utilisant un premier faisceau de réception sur la base au moins en partie de l'information de contrôle sidelink ; et
la transmission (915), via les ressources réservées par le deuxième UE pour des transmissions par le deuxième UE, d'un deuxième message en utilisant un premier faisceau d'émission du premier UE (115), une direction du premier faisceau d'émission étant différente d'une direction du premier faisceau de réception.

2. Le procédé selon la revendication 1, comprenant en outre :
la réception de l'information de contrôle sidelink via une première direction de faisceau d'émission associée au deuxième UE ; et
la détermination des une ou plusieurs directions de faisceau d'émission associées aux ressources réservées par le deuxième UE sur la base au moins en partie de la réception de l'information de contrôle sidelink via la première direction de faisceau d'émission associée au deuxième UE.

3. Le procédé selon la revendication 2, dans lequel les une ou plusieurs directions de faisceau d'émission comprennent la première direction de faisceau d'émission.

4. Le procédé selon la revendication 2, dans lequel les une ou plusieurs directions de faisceau d'émission comprennent une seconde direction de faisceau d'émission, l'indication des une ou plusieurs directions de faisceau d'émission indiquant la seconde direction de faisceau d'émission par rapport à la première direction de faisceau d'émission.

5. Le procédé selon la revendication 1, comprenant en outre :
la détermination d'un ensemble de directions pour la transmission du deuxième message sur la base au moins en partie de l'indication des une ou plusieurs directions de faisceau d'émission associées aux ressources réservées par le deuxième UE, chaque direction de l'ensemble de directions étant différente de la direction du premier faisceau de réception ou de directions adjacentes à la direction du premier faisceau de réception.

6. Le procédé selon la revendication 1, comprenant en outre :
la détermination d'un ensemble de ressources pour la transmission d'un troisième message simultanément à la réception du premier message en utilisant le premier faisceau de réception, l'ensemble de ressources comprenant des ressources différentes des ressources réservées par le deuxième UE, des ressources différentes d'un second ensemble de ressources adjacentes aux ressources réservées par le deuxième UE, ou une combinaison de celles-ci ; et
la transmission, via des ressources de l'ensemble de ressources, du troisième message à l'aide d'un second faisceau d'émission du premier UE (115), la direction du second faisceau d'émission étant la direction du premier faisceau de réception, une direction adjacente à la direction du premier faisceau de réception, ou une combinaison de celles-ci.

7. Le procédé selon la revendication 1, comprenant en outre :
la réception, à partir d'un troisième UE, d'une seconde information de contrôle sidelink pour réaliser des communications en duplex intégral avec le troisième UE, la seconde information de contrôle sidelink comprenant une indication de secondes ressources réservées par le troisième UE et une indication d'une ou plusieurs directions de faisceau d'émission associées aux ressources réservées par le troisième UE ; et
la sélection, au moins en partie sur la base de la réception de la seconde information de contrôle sidelink et de l'information de contrôle sidelink, de la direction du premier faisceau d'émission à partir d'un ensemble de directions, chaque direction de l'ensemble de directions étant différente de la direction du premier faisceau de réception, d'un second faisceau de réception associé à la réception d'un troisième message à partir du troisième UE, ou d'une combinaison de ceux-ci ;
le procédé comprenant en outre, en particulier :
la sélection, au moins en partie sur la base de la réception de la seconde information de contrôle sidelink et de l'information de contrôle sidelink, de ressources pour la transmission du deuxième message à partir d'un ensemble de ressources différentes des ressources réservées par le deuxième UE, des secondes ressources réservées par le troisième UE, ou d'une combinaison de celles-ci.

8. Le procédé selon la revendication 1, comprenant en outre :
l'obtention d'un ensemble de mesures d'interférence pour un ensemble de paires de faisceaux, chaque mesure d'interférence correspondant à un faisceau d'émission respectif et au premier faisceau de réception ;
l'identification d'une première mesure d'interférence de l'ensemble de mesures d'interférence associée à une valeur inférieure à d'autres mesures d'interférence de l'ensemble de mesures d'interférence ; et
la sélection du premier faisceau d'émission parmi une pluralité de faisceaux d'émission sur la base au moins en partie de l'identification de la première mesure d'interférence, la première mesure d'interférence correspondant à une paire de faisceaux comprenant le premier faisceau d'émission et le premier faisceau de réception.

9. Le procédé selon la revendication 1, comprenant en outre :
la transmission d'une information de contrôle sidelink comprenant une indication de secondes ressources réservées par le premier UE (115) et une indication d'une ou plusieurs directions de faisceau d'émission associées aux ressources réservées par le premier UE (115).

10. Un procédé de communication sans fil au niveau d'un premier équipement utilisateur, UE (115), comprenant :
la transmission (1105), à un deuxième UE, d'une information de contrôle sidelink pour réaliser des communications en duplex intégral avec le deuxième UE, l'information de contrôle sidelink comprenant une indication de ressources réservées par le premier UE (115) et une indication d'une ou plusieurs directions de faisceau d'émission associées aux ressources réservées par le premier UE (115) ;
la transmission (1110), via les ressources réservées par le premier UE (115), d'un premier message au deuxième UE en utilisant un premier faisceau d'émission, le premier faisceau d'émission ayant une première direction de faisceau d'émission sur la base au moins en partie de l'indication des une ou plusieurs directions de faisceau d'émission ; et
la réception (915), via les ressources réservées par le premier UE (115) pour des transmissions par le premier UE (115), d'un deuxième message utilisant un premier faisceau de réception du premier UE (115), une direction du premier faisceau de réception étant différente d'une direction du premier faisceau d'émission.

11. Le procédé selon la revendication 10, comprenant en outre :
la réception d'une seconde information de contrôle sidelink en utilisant un premier faisceau de réception, la seconde information de contrôle sidelink comprenant une indication de ressources réservées par un troisième UE, une indication d'une seconde direction de faisceau d'émission associée au troisième UE, ou une combinaison de celles-ci ; et
la détermination des une ou plusieurs directions de faisceau d'émission associées aux ressources réservées par le premier UE (115) sur la base au moins en partie de la réception de la seconde information de contrôle sidelink via le premier faisceau de réception ;
le procédé comprenant en outre, en particulier :
la sélection des une ou plusieurs directions de faisceau d'émission à partir d'un ensemble de directions de faisceau d'émission, chaque direction de faisceau d'émission de l'ensemble de directions de faisceau d'émission étant différente d'une direction du premier faisceau de réception ou de directions adjacentes à la direction du premier faisceau de réception ; ou
le procédé comprenant en outre, en particulier :
l'obtention d'un ensemble de mesures d'interférence pour un ensemble de paires de faisceaux, chaque mesure d'interférence correspondant à un faisceau d'émission respectif et au premier faisceau de réception ;
l'identification d'une première mesure d'interférence de l'ensemble de mesures d'interférence associée à une valeur inférieure à d'autres mesures d'interférence de l'ensemble de mesures d'interférence ; et
la sélection du premier faisceau d'émission parmi une pluralité de faisceaux d'émission sur la base au moins en partie de l'identification de la première mesure d'interférence, la première mesure d'interférence correspondant à une paire de faisceaux comprenant le premier faisceau d'émission et le premier faisceau de réception.

12. Le procédé selon la revendication 10, dans lequel les une ou plusieurs directions de faisceau d'émission comprennent la première direction de faisceau d'émission.

13. Le procédé selon la revendication 10, dans lequel les une ou plusieurs directions de faisceau d'émission comprennent une seconde direction de faisceau d'émission, l'indication des une ou plusieurs directions de faisceau d'émission indiquant la seconde direction de faisceau d'émission par rapport à la première direction de faisceau d'émission.

14. Un parmi un appareil pour la communication sans fil au niveau d'un premier équipement utilisateur, UE (115), comprenant des moyens pour réaliser le procédé selon l'une des revendications 1 à 9 ou un appareil pour la communication sans fil au niveau d'un premier UE (115), comprenant des moyens pour réaliser le procédé selon l'une des revendications 10 à 13.

15. Un parmi un programme de calculateur comprenant des instructions qui, lorsqu'elles sont exécutées par un ou plusieurs processeurs d'un appareil pour la communication sans fil au niveau d'un premier équipement utilisateur, UE (115), amènent le premier UE (115) à réaliser le procédé selon l'une des revendications 1 à 9, ou un programme de calculateur comprenant des instructions qui, lorsqu'elles sont exécutées par un ou plusieurs processeurs d'un appareil pour la communication sans fil au niveau d'un premier UE (115), amènent le premier UE (115) à réaliser le procédé selon l'une des revendications 10 à 13.
